# EUROPEAN PATENT APPLICATION

(11) **EP 1 457 651 A2**
(43) Date of publication of application: **15.09.2004**
(21) Application number: 04005656.6
(22) Date of filing: 10.03.2004
(51) Int. Cl.: F02B 27/02

(54) **Mixture supply device for internal-combustion engine**

(30) Priority: 10.03.2003 JP 2003062694; 19.02.2004 JP 2004042198; 19.02.2004 JP 2004042199
(71) Applicant: Hitachi, Ltd., Chiyoda-ku, Tokyo 101-8010 (JP)
(72) Inventor: Okamoto, Yoshio, Nishiibaraki-gun Ibaraki 319-0102 (JP); Oyamada, Tomonaga, Minami Arupusu-shi Yamanashi 400-0205 (JP); Yamakado, Makoto, Tsuchiura-shi Ibaraki 300-0007 (JP); Minegishi, Teruhiko, Hitachinaka-shi Ibaraki 312-0031 (JP); Munakata, Akihiro, Hitachinaka-shi Ibaraki 312-0052 (JP); Kadomukai, Yuzo, Ishioka-shi Ibaraki 315-0035 (JP); Nagano, Masami, Hitachinaka-shi Ibaraki 312-0063 (JP); Kowatari, Takehiko, Kashiwa-shi Chiba 277-0028 (JP)
(74) Representative: Beetz & Partner Patentanwälte

(57) **Abstract**

The present invention relates to a mixture supply device for maintaining a favorable combustion state by controlling with high response the quantity and quality of a mixture to be supplied to cylinders, and thereby to accelerate reduction in the emission level of harmful exhaust containing air pollutants, and reduction in fuel consumption. A mixture supply device (101) used in an internal-combustion engine for automobiles having multi-cylinder combustors is constructed into the type where motor-driven fuel spraying mechanisms (105) corresponding to respective cylinders, a motor-driven exhaust recirculating mechanism (107) for collecting part of the exhaust generated by combustion of a mixture in the above-mentioned internal-combustion engine and then remixing the above-generated exhaust into the mixture, and an integrated controller for transmitting control signals simultaneously to the above-mentioned three types of mechanisms are built into a motor-driven multiple-throttle mechanism (103), this motor-driven multiple-throttle mechanism (103) being able to control a plurality of inlet passageways of air flow with one motor, being formed with restrictions of different sizes and shapes in respective inlet passageways, even at the same rotational angle, and being equipped with an air flow control valve (123) capable of accelerating air flow.

## Description

### Background of the Invention:

### <Field of the Invention>

The present invention relates to a mixture supply device in an automobile internal-combustion engine, and more particularly to a mixture supply device equipped with a mechanism for improving the combustion state within the engine and reducing harmful exhaust gas emission levels.

### <Prior Art>

In order to protect the global environment, automobile engines are required to reduce the emission levels of the harmful exhaust gases which are air pollutants represented by the substances included in the exhaust gases, such as an unburnt fuel, carbon monoxide, hydrocarbon, and nitrogen oxides, and to reduce fuel consumption. To respond to these requirements, it is effective to realize a better combustion state at all times in a wide range of engine operating conditions and engine speeds by forming a higher-quality mixture and supplying it to the cylinder interior that becomes a combustion chamber.

To improve a combustion state, it is required that a highly combustible mixture be formed by appropriately mixing air and the exhaust recirculated, and that fluidity be given to this mixture to create a state under which combustion easily propagates inside the cylinder. It is possible, by rapidly changing the state of such a mixture to an appropriate state according to the output request issued by the accelerator (i.e. throttle pedal) operations of the driver, and incorporating that state into the control of engine output, to stabilize the combustion state under both the steady operating state of the engine and the transient operating state thereof, and hereby to give contributions to the reduction of harmful exhaust gas emission levels and reduction in fuel consumption. A mixture supply device with these functions is required for reduced in dimensions and price so as to be mountable in a general automobile, so that a more significant global environment protection effect can be obtained by mounting such a device in a larger number of automobiles.

The structures, called modules or units, that are integrated by combining a plurality of functions and devices such as a fuel supply device and a throttle device for controlling the quantity of air taken in, are used primarily for minimizing dimensions and engine manufacturing expenses by saving assembly workloads. Examples of such conventional module structures include a multiple-throttle body for controlling the flow rate of the air taken into the cylinders, inclusive of air inlet passageways and throttle valves, of the engine, a fuel injection device, a fuel pump, a fuel filter, a fuel pressure regulator type of fuel injection device for automotive motorcycles, and the like. (See, for example, Patent reference 1: Japanese Application Patent Laid-Open Publication No. Hei 10-122101). Also, an injector for supplying a fuel, a fuel pump, a fuel filter, a fuel pressure regulator, and an electronic control device are assembled with a throttle device to form a unit (see, for example, Patent reference 2: Japanese Application Patent Laid-Open Publication No. 2001-263128). In these conventional structures, the devices required for the construction of an air inlet system on the engine are integrated. Compared with independent mounting of each device, the method of integrating all necessary devices makes it possible to improve their productivity and their mountability on the engine and save engine manufacturing expenses, and also to compensate for any changes in the quantity of fuel injection for each unit according to the particular characteristics of the throttle and of the injector and hereby reduce the performance variations occurring during mounting on the engine.

### Summary of the Invention:

### <Problems to be Solved by the Invention>

In such modules and units, however, even when the quantity of air taken into the cylinder and the quantity of fuel injection are controlled by the throttle device and the fuel injection device, respectively, the controllability of air flow lacks, which makes it difficult to achieve fuel injection improvement such as improving fuel-atomizing characteristics using the flow of air or of the exhaust recirculated, and to generate and control a swirl flow, and the like, in the mixture. Accordingly, compared with the construction not having devices integrated into a unit, module or unit construction has posed difficulties in obtaining a significant combustion state improvement effect. During low-speed operation of a general engine, in particular, since the quantity of air taken in by the engine within a fixed time is small and thus the velocity and flow rate of the air introduced into the engine are low, the activation of flow, the atomization of fuel, spatial distribution control of the fuel droplet size, and other active measures for accelerating combustion are required for reduced harmful exhaust gas emission levels. For these reasons, in such related art, it has been necessary to provide measures such as, in addition to installing the above-mentioned throttle device, separately installing the air flow control valve, called the swirl control valve or the tumble control valve, that is intended to accelerate air flow. Also, to supply the recirculated exhaust (EGR: Exhaust Gas Recirculation) considered to be valid for reducing nitrogen oxides, since it is necessary to install a special introduction port and a special control device at remote independent locations and since the installation locations themselves differ according to engine, control timing and dynamic characteristics have needed to be modified according to the particular construction of the engine.

The present invention was made with the above-described problems in view, and an object of the invention is to provide a mixture supply device that can improve the combustion state within an engine and reduce harmful exhaust gas emission levels by rapidly and appropriately controlling the air, fuel, and recirculated-exhaust quantities in the mixture supplied to cylinders, a sprayed fuel state, a mixture state, and a flow state, according to the particular accelerator operations of the driver and the particular operating conditions of the engine. Another object of the invention is to provide a mixture supply device that can reduce the quantities of harmful exhaust gases emitted during cold starting of an engine when the atomization of its fuel is insufficient, or when the fuel, even if fully atomized, heavily sticks to the inner wall of an air inlet pipe, or when the quantity of fuel to be supplied is increased to compensate for its shortage due to sticking to the inner wall of the air inlet pipe.

### <Means for Solving the Problems>

The mixture supply device according to the present invention comprises a multiple throttle mechanism into which a fuel spraying mechanism, an exhaust recirculating mechanism, and/or an integrated controller can be formed integrally. The multiple throttle mechanism, in particular, can have a built-in air flow control valve that makes it possible not only to form one or more restrictions for each cylinder of the engine and/or to control the flow rate of air by changing the size of the restrictions formed in a plurality of inlet passageways, but also, at the same time, to form different shapes of restrictions for each inlet passageway, and hereby to control the swirl and deflecting air streams in the inlet passageways and in the cylinders. This air flow control valve can also control the flow of a mixture in the inlet passageways and the cylinders by generating different flow rates and/or velocities for each inlet passageway and, when air flows through the valve, deflecting the traveling direction of the air flow taken in. It thus becomes possible to obtain an effect equivalent to that achievable in the conventional structures having, in addition to a throttle device, a valve device for controlling the flow of air. In addition, this air flow control valve can accelerate the swirl flow of air that occurs at low flow rate, and/or can also accelerate combustion more efficiently by concentratedly supplying an air stream in its deflected condition towards the vicinity of the fuel spraying mechanism and/or improve the atomization characteristics of fuel by the action of collision between the fuel droplets and the high-speed air stream. For application to an engine having a plurality of inlet routes for one cylinder, the air velocity can be increased by passing a larger quantity of air stream through a specific inlet route at low flow rate, and the quantity of air taken into the cylinder per cycle can be increased by increasing the inertial force of the air. Further, the engine output obtained at the same engine speed can be increased, which, in turn, contributes to reduced fuel consumption.

Furthermore, the air flow control valve in the multiple-throttle mechanism can simultaneously control the flow rates of air and its flow in a plurality of inlet passageways and has a sealed structure that reduces the leakage of the air which continuously flows between adjacent inlet passageways and through the upstream and downstream regions of the valve. For an increased sealing effect, a guide groove machined in the valve is provided with a movable sealing member which is movable in the guide groove, and the clearances of the flow passageways are reduced or sealed by controlling the movement of the movable sealing member according to factors such as electromagnetic force and the pressure difference occurring between the upstream and downstream of the valve when its opening state is not too significant. Contact between the movable sealing member and its mating surface under the sealed state of the flow passageways significantly occurs in part of the valve rotation range as in the case of a fully closed or slightly opened state under which particularly high sealing performance is required, and thereby enhances the contact sealing effect. In most of the valve rotation range, however, no contact occurs or there only occurs very slight contact. Thus, it becomes possible to accurately control flow rates down to a low flow rate, while at the same time suppressing increases in the torque required for rotational driving of the valve. The adoption of such sealed structure improves the controllability of the air flow in the air flow control valve, the controllability of the flow rates, and the air velocity increasing effect, and contributes to further improved combustion and reduced fuel consumption.

This mixture supply device is installed halfway on an air inlet route leading to the cylinder interior in an automobile engine, more particularly, downstream from its surge tank at which the air inlet pipe routed from an air cleaner is diverged towards each cylinder, halfway on an independent air inlet pipe directly connecting the surge tank and each cylinder.
Consequently, air, fuel, and recirculated exhaust are all controlled at a position close to the cylinder, the responsiveness of mixture formation thus improves, and variations in response between the three fluids are reduced. This mixture supply device is electrically connected to the accelerator (i.e. the throttle pedal), and the fuel spraying mechanism, the exhaust recirculating mechanism, and the multiple-throttle mechanism are driven by respective motors and controlled in accordance with the commands sent from the integrated controller. While considering the operating state of the accelerator, the operating conditions of the engine, and the state of exhaust, the integrated controller changes engine output according to the particular accelerating/decelerating operations of the driver, and in order to minimize harmful exhaust gas emissions and fuel consumption, synthetically determines the fuel injection rate, the recirculated-exhaust mixing rate, the air supply rate, the flow of the air, and the like, in the corresponding mixing and forming device, and transmits control commands to each mechanism.

In the inlet passageways communicating with the openings in the restrictions of the air flow control valve which constitutes the mixture supply device, the fuel spraying port of the fuel spraying mechanism is disposed downstream from the opening in each restriction, and during the starting operation of the engine, a high-speed air stream created at each restriction in the air flow control valve is routed from the outer periphery of the fuel spraying mechanism to the fuel spraying port, and thus the fuel particles injected are further atomized and are then carried by the high-speed air stream.

The air flow control valve can, by its rotary motion, change the cross-sectional shape of the openings in the restrictions. During the air inlet stroke period of the internal-combustion engine, when the engine is started, the small area of the opening in each restriction in the air flow control valve is controlled to change to a large area. The air stream, after being speeded up at the restriction, is then inducted from the outer periphery of the fuel spraying mechanism into the fuel spraying port, and further atomizes the fuel particles injected, thus extending the opening area of the restriction, and carrying the fuel particles by means of the quantitatively increased air stream.

Furthermore, the openings in the above-mentioned air flow control valve have a convex shape and during the rotary motion of the valve, the openings with a small area are located close to the fuel spraying port of the fuel spraying mechanism, in the inlet passageways, and the openings with a large area are disposed so as to be remote from the fuel spraying port of the fuel spraying mechanism, in the inlet passageways. When the engine is started, control is provided so that the small opening area changes to the large opening area during the starting operation of the engine, with the consequence that as described above, the fuel particles injected are further atomized and then carried by a quantitatively increased air stream.

By using such a mixture supply device, a mixture created by mixing air, fuel, and recirculated exhaust to obtain a moderate rate and moderate quality and fluidity, can be supplied in a high-response controlled condition, the formation of a favorable combustion state in each cylinder can be accelerated, and harmful exhaust and fuel consumption can be reduced.

### Brief Description of the Drawings:

Fig. 1 is a schematic external view of a mixture supply device pertaining to the present invention when it is applied to an in-line four-cylinder type of automobile engine having two inlets per cylinder;
Fig. 2 is an X-directional plan view of the mixture supply device of the present invention, shown in Fig. 1;
Fig. 3 is a cross-sectional view of the A-A' section in the mixture supply device of the present invention, shown in Figs. 1 and 2;
Fig. 4 is a cross-sectional view of the section B-B' section in the mixture supply device of the present invention, shown in Figs. 1 and 2;
Fig. 5 is a schematic view explaining the configuration of the air inlet system used in a conventional general engine;
Fig. 6 is a flowchart showing the flow of supply of a mixture to a cylinder in the air inlet system configuration of the conventional general engine shown in Fig. 5;
Fig. 7 is a schematic view showing an air inlet system configuration with the mixture supply device of the prevent invention being applied to the engine shown in Fig. 5;
Fig. 8 is a schematic diagram showing the flow of supply of a mixture to a cylinder in the air inlet system configuration of the engine to which the mixture supply device of the prevent invention, shown in Fig. 7, is applied;
Fig. 9 is a schematic external view of an air flow control valve used in the mixture supply device shown in Figs. 1 to 4;
Fig. 10 is a set of partial cross-sectional views showing the shapes of the restrictions in two inlet passageways that change in state with the rotation of the air flow control valve of Fig. 9 in the multiple-throttle mechanism of the mixture supply device of the present invention;
Fig. 11 is a schematic cross-sectional view showing the flow of the air existing when the restriction in a low-flow inlet passageway is opened by the air flow control valve of Fig. 9;
Fig. 12 is a schematic cross-sectional view showing the flow of the air existing when the restrictions in both low-flow and high-flow inlet passageways are opened by the air flow control valve of Fig. 9;
Fig. 13 is a graph showing the relationship between the opening state of the air flow control valve of Fig. 9 and the relative opening cross-sectional area of a restriction formed in the inlet passageway;
Fig. 14 is a graph showing the relationships between engine speed and cylinder air inlet efficiency, established with the air flow control valve of Fig. 9 being fixed to a fully opening position and a half-opening position;
Fig. 15 is a graph showing, in the engine where the mixture supply device with the air flow control valve of Fig. 9 was mounted under the air inlet system of Fig. 7, changes in cylinder air inlet efficiency due to changes in the relative opening area of the valve during 1,500-rpm rotation of the engine;
Fig. 16 is a schematic external view of an air flow control valve having openings different from those of Fig. 9 in terms of shape;
Fig. 17 is a set of partial cross-sectional views showing the vicinity of inlet passageways from the outlet side relative to the corresponding cylinder when the air flow control valve shown in Fig. 16 was mounted in the multiple-throttle mechanism and then the opening state of the valve was changed;
Fig. 18 is another set of partial cross-sectional views showing the vicinity of inlet passageways from the outlet side relative to the corresponding cylinder when the air flow control valve shown in Fig. 16 was mounted in the multiple-throttle mechanism and then the opening state of the valve was changed;
Fig. 19 is a cross-sectional view equivalent to Fig. 4, showing the mixture supply device using an air flow control valve of the type formed with one restriction in each inlet passageway;
Fig. 20 is a schematic view of the sealed structure in an air flow control valve of the type formed with a restriction at both inlet and outlet sides in one passageway;
Fig. 21 is a set of partial cross-sectional views explaining the formed state and sealed state of the restrictions in two inlet passageways that change in state with the rotation of the air flow control valve of Fig. 20 in the multiple-throttle mechanism of the mixture supply device of the present invention;
Fig. 22 is a set of partial cross-sectional views explaining the operation of a movable seal due to the presence/absence of a differential pressure between the upstream and downstream of the air flow control valve shown in Fig. 20;
Fig. 23 is a schematic view explaining the sealed structure in an air flow control valve of the type formed with one restriction in one passageway;
Fig. 24 is a set of cross-sectional views showing the multiple-throttle mechanism in the mixture supply device of the present invention where a sealed structure having a guide groove and a movable sealing member is constructed at the air flow control valve side and the casing side;
Fig. 25 is a cross-sectional view of the multiple-throttle mechanism in that mixture supply device of the present invention which has a sealed structure of the type where a sealing effect is made variable by operating an electromagnet containing a magnetic movable sealing member in the seal reinforcement portion at the casing side;
Fig. 26 is a set of partial cross-sectional views explaining how the movable sealing member shown in Fig. 25 operates by the action of the electromagnet in the multiple-throttle mechanism used in the mixture supply device of the present invention;
Fig. 27 is a set of cross-sectional views showing the multiple-throttle mechanism in that mixture supply device of the present invention which is constructed so that by reducing the curvature of a valve insertion hole in the casing section for achieving a greater sealing effect, the sealing effect is increased particularly when the movable sealing member moves past the curvature reducer;
Fig. 28 is a cross-sectional view of the multiple-throttle mechanism in that mixture supply device of the present invention which is constructed so that the diameter of the bearing installation section in the air flow control valve is reduced and during the occurrence of the resulting differential pressure between the upstream and downstream of the valve, the sealing effect of the movable sealing member is increased by the deformation of the bearing installation section;
Fig. 29 is a set of partial cross-sectional views explaining how, in the multiple-throttle mechanism in that mixture supply device of the present invention, the movable sealing member shown in Fig. 28 increases in sealing effect by the deforming action of the bearing installation section;
Fig. 30 is a cross-sectional view equivalent to Fig. 4, showing the mixture supply device having an inlet passageway and an air-assist-type mount connected by an assist air supply passageway;
Fig. 31 is a cross-sectional view equivalent to Fig. 4, showing the mixture supply device in which an inlet passageway and an air-assist-type mount are connected by an assist air supply passageway and an air stream is supplied to the air-assist-type fuel spraying mechanism through the assist air supply passageway;
Fig. 32 is a partial cross-sectional view of the mixture supply device in which the assist air supply passageway for supplying an air stream to the fuel spraying mechanism is opened to a high-flow inlet passageway;
Fig. 33 is a schematic external view of a mixture supply device of the type that contains two motors, two drives, and two air flow control valves inside, each of these elements controlling four inlet passageways of air flow;
Fig. 34 is a schematic external view of a mixture supply device of the type that contains four motors, four drives, and four air flow control valves inside, each of these elements controlling four inlet passageways of air flow;
Fig. 35 is a diagram showing an air velocity pattern of the air flow control valve according to the present invention;
Fig. 36 is a set of partial cross-sectional views of the mixture supply device, showing the operating state of the air flow control valve;
Fig. 37 is a set of views showing the shapes of the opening in the air flow control valve under different states;
Fig. 38 is a view showing the mixture supply device of the present invention, mounted in an in-line multi-cylinder internal-combustion engine;
Fig. 39 is a diagram in which the HC emission levels detected during combustion in a typical cylinder of a multi-cylinder internal-combustion engine are compared with those of a conventional fuel injection valve; and
Fig. 40 is a diagram in which the HC emission pattern during the time from engine start to first idling is compared with a pattern obtained using a conventional fuel injection valve.

### Description of the Invention:

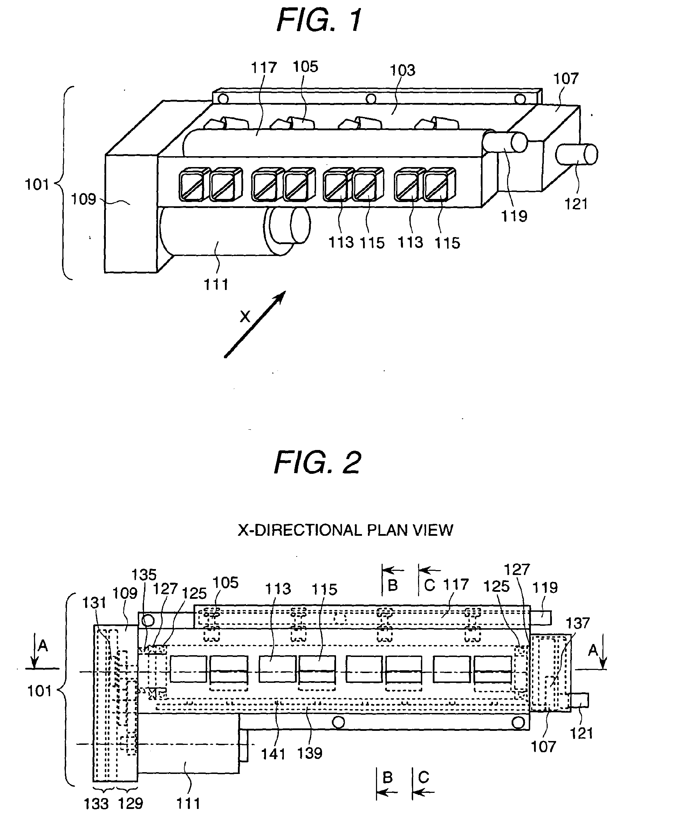

Fig. 1 is a schematic external view of a mixture supply device 101 pertaining to the present invention when it is applied to an in-line four-cylinder automobile engine having two inlets per cylinder. This mixture supply device is constructed mainly of a multiple-throttle mechanism 103, a fuel spraying mechanism 105, an exhaust recirculating mechanism 107, and an integrated controller 109. The multiple-throttle mechanism 103 is provided with a built-in air flow control valve capable of controlling the flow rate of air and the flow of the air integrally for each inlet passageway, and has, at bottom, a motor 111 for driving the foregoing valve. On a front lateral side of the corresponding page, eight openings are provided as air inlets, and every two adjacent ports at the end take in air for one cylinder of the engine. One of the two paired inlets is a low-flow inlet 113, and the other is a high-flow inlet 115. Although not shown in the figure, openings to function as mixture outlets corresponding to the respective inlets are provided on a rear lateral side of the page, with the inlets and the outlets being connected by an inlet passageway section, i.e., passageways, inside the multiple-throttle mechanism 103. The fuel spraying mechanism 105 has one end connected to a fuel feeder 117 present at a top of the multiple-throttle mechanism 103 and has a body fixed thereto. A fuel pipe extended from a fuel tank of an automobile to a fuel pump thereof is connected to a fuel supply port 119, and a fuel is introduced into the fuel feeder 117 through the fuel pipe and sprayed into the inlet passageways by the fuel spraying mechanism 105. The exhaust recirculating mechanism 107 has a recirculated-exhaust control valve built thereinto, controls the quantity of recirculated exhaust introduced from a recirculated-exhaust introduction port 121, and distributes the exhaust to each inlet passageway.

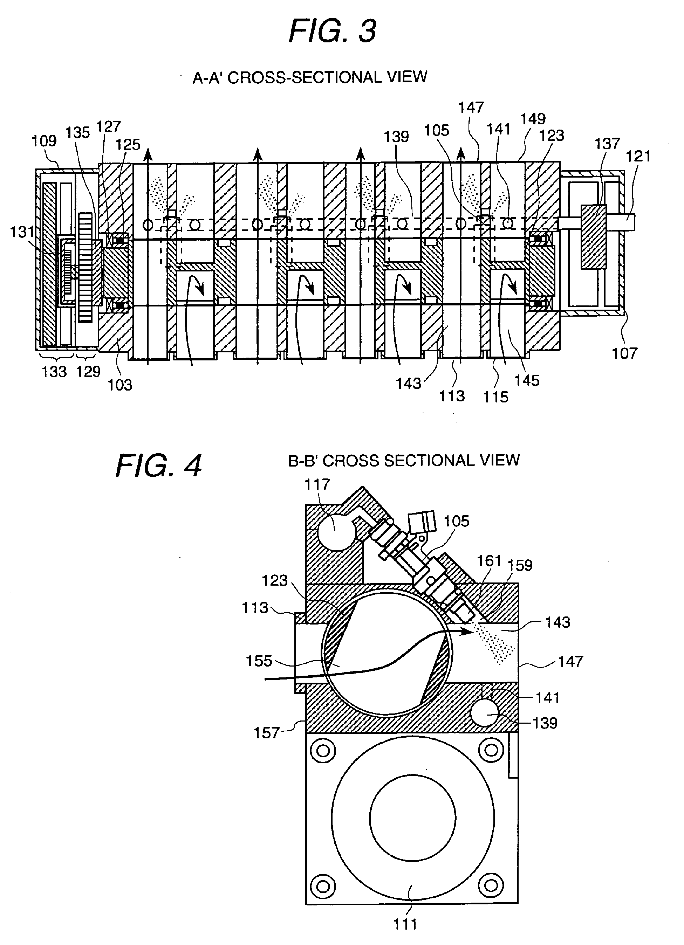

Fig. 2 is a plan view from an X-axial direction of the mixture supply device 101 shown in Fig. 1. Referring to Fig. 2, a front lateral side of the page is an outlet side to the cylinders. The multiple-throttle mechanism 103 has an air flow control valve 123 (shown in Fig. 3) constructed therein, and both ends of the air flow control valve 123 are rotatably supported by bearings 125. At both ends of the air flow control valve 123, sealing members 127 are also provided and hereby, the air, fuel, and recirculated exhaust flowing inside the multiple-throttle mechanism 103 are prevented from leaking to the exhaust recirculating mechanism 107. Torque of the motor 111 installed at a bottom of the multiple-throttle mechanism 103 is transmitted to the air flow control valve 123 through a drive 129 included in a casing of the integrated controller 109, thereby inciting a rotary motion of the air flow control valve 123. One end of the air flow control valve 123 is connected to a throttle position sensor 131, from which rotational angle information on the rotary motion of the air flow control valve 123 is output as electrical signals, and these signals are then transmitted to an integrated control circuit 133. The air flow control valve 123 also has a default spring section 135, and when electric power to the motor 111 is cut off, a rotational angle of the air flow control valve 123 (this angle is also a rotational angle of a rotary body described later in this Specification), namely, the opening state of the valve, is reset to a previously set value by an action of spring force of the default spring section 135. Inside the exhaust recirculating mechanism 107, a recirculated-exhaust control valve 137 is provided so that when the recirculated exhaust introduced from the recirculated-exhaust introduction port 121 enters the mixture, the quantity of entry is controlled. Recirculated exhaust is distributed, and enters, from a recirculated-exhaust entry port 141 smaller than a recirculated-exhaust distribution pipe 139 in terms of diameter, to an inside of each inlet passageway through the recirculated-exhaust distribution pipe 139 provided at the bottom of the multiple-throttle mechanism 103.

Fig. 3 is a cross-sectional view of section A-A' shown in Fig. 2. The lower side and upper side in Fig. 3 are an air inlet side and a cylinder side of the engine, respectively. In the multiple-throttle mechanism 103, eight inlets are provided on a lower lateral side of the figure, and every two adjacently disposed inlets, one a low-flow inlet 113 and one a high-flow inlet 115, take in air for one cylinder of the engine. These inlets communicate with respective low-flow inlet passageways 143 and high-flow inlet passageways 145, and are further connected to respective low-flow mixture outlets 147 and high-flow mixture outlets 149, both provided on an upper lateral side of the figure. The low-flow mixture outlets 147 and the high-flow mixture outlets 149 are further connected to the respective passageways leading to the mixture inlet ports in the cylinders of the engine. The air flow control valve 123 is a rotary body, which coordinates with its peripheral enclosure to form a restricting portion (shield and restriction), is installed so that the rotary body intersects halfway with the low-flow inlet passageways 143 and the high-flow inlet passageways 145, and has a previously machined opening of a shape (opening shape) corresponding to each inlet passageway. The shape of the opening formed in each inlet passageway is determined by the relationship between a wall surface of the inlet passageway and an opening machined in the air flow control valve, and by the rotary motion of the air flow control valve, driven by driving the motor 111, the shape of the restricting portion is determined in accordance with the relationship between a predetermined rotational angle (phase) and the shape of the restricting portion in the air flow control valve. Thereby, the quantity of air supplied to the cylinder through each inlet passageway, and the flow of the air are controlled. The fuel spraying mechanism 105 is installed between the low-flow inlet passageways 143 and the high-flow inlet passageways 145, and a fuel spraying port is present downstream from the air flow control valve 123, near the cylinder. And fuel is spray-supplied from the spraying port to both inlet passageways. The recirculated-exhaust entry port 141 is also present downstream from the air flow control valve 123, near the cylinder. This recirculated-exhaust entry port 141 is provided either at the opposite side to the fuel spraying port, across the inlet passageway, or in a circumferential direction of at least the inlet passageway, at a position different from that of the fuel spraying port, and thus, by utilizing the flow and heat of recirculated exhaust near the wall surface of the inlet passageway, the fuel sprayed into the inlet passageway is prevented from sticking to the wall surface thereof. The structure as described above ensures that a mixture obtained by mixing air, fuel, and recirculated exhaust, is discharged from the low-flow mixture outlets 147 and the high-flow mixture outlets 149 and supplied to the cylinder interior functioning as the combustion chamber of the engine.

Fig. 4 is a cross-sectional view of section B-B' shown in Fig. 2. A left side and a right side in Fig. 4 are the inlet side and the cylinder side of the engine, respectively. Air is taken in from the inlet 113 and passed into the inlet passageway 143, from which the air, after having its flow rate and flow controlled by the air flow control valve 123 installed halfway in the inlet passageway, is then discharged towards the corresponding cylinder of the engine. The air flow control valve 123 can be rotated both clockwise and counterclockwise when viewed on the page, has a restriction formed between an opening 155 and an inlet passageway formed in a casing 157 of the multiple-throttle mechanism, and controls the flow rate and flow of the air passed through the restriction. The flow of the air is controlled either by, for example, providing differences in air velocity and air flow rate between inlet passageways and then activating the swirl flow within the cylinder by use of an imbalance created after discharge, by varying the spatial distributions of the velocity and flow rate in an inlet passageway and hereby generating a rotating flow, a swirl flow, or the like, by, at low flow rate, deflecting the air flow in the direction of the fuel spraying port and thus accelerating the atomization of sprayed fuel by use of the air flow. Also, when the air flow control valve 123 is rotated clockwise and the restriction is opened, this restriction is opened from the fuel spraying mechanism 105 to facilitate further concentration of the air stream in the spraying port and hereby to allow easy atomization by making a high-speed air stream collide with the fuel particles. Conversely, when the air flow control valve 123 is rotated counterclockwise and the restriction is opened, this restriction is opened from the side opposite to that of the fuel spraying mechanism 105, thus making it easy to guide a high-speed air flow to a wall surface and hereby to obtain a suppression effect against the sticking of sprayed fuel to the wall surface. The fuel spraying mechanism 105 has one end connected to the fuel feeder 117 in order to receive fuel, and is fixed to a mount 159 which communicates with an inlet passageway machined in the multiple-throttle mechanism 103. A fuel injection port 161 of the fuel spraying mechanism 105 is opened downstream from the air flow control valve 123, near the cylinder, and injects fuel towards a low-flow inlet passageway and a high-flow inlet passageway. At a bottom of each inlet passageway, the recirculated-exhaust distribution pipe 139 is disposed and recirculated exhaust is introduced from the recirculated-exhaust entry port 141 into the inlet passageway. The recirculated-exhaust entry port 141 is provided either at the opposite position to the fuel injection port 161, in the inlet passageway, or at a different position in a circumferential direction, and is used to supply recirculated exhaust to a section at which fuel is expected to collide with a wall surface and then to prevent, by use of heat and flow, sprayed fuel from sticking to the wall surface. The air, fuel, and recirculated exhaust thus introduced into each inlet passageway form a mixture, and after fluidity has been given, the mixture is discharged from the mixture outlets 147, towards the cylinders of the engine.

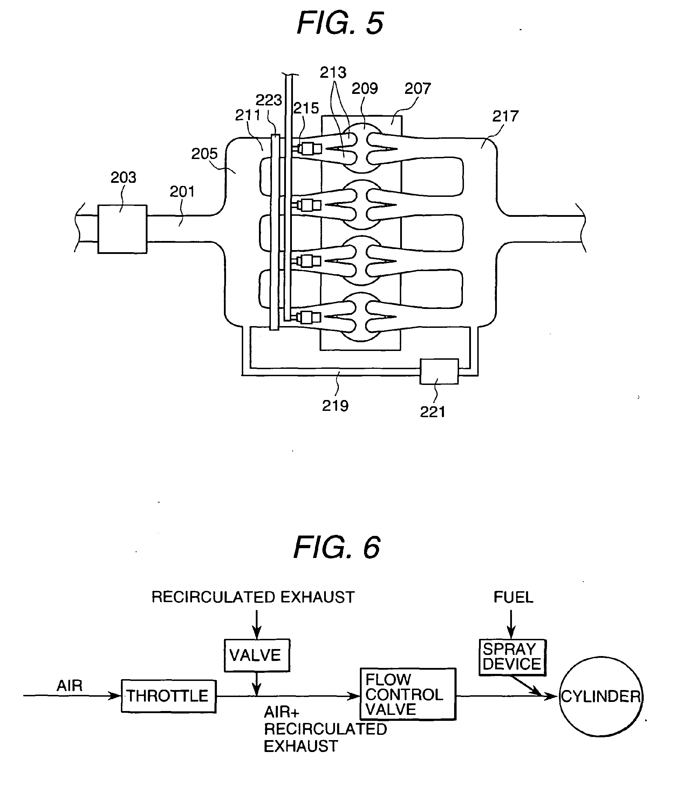

Fig. 5 shows the device configuration of the air inlet system in a conventional type of general engine. After being passed through an air cleaner and taken from the atmosphere into an air inlet pipe 201, air has its flow rate controlled by a restriction formed in a throttle device 203 present halfway on the air inlet pipe, and is then sent to a surge tank 205. From the surge tank 205, an independent air inlet pipe 211 diverges towards each cylinder 209 of an engine body 207 and is connected to each cylinder air inlet 213. Although one to three cylinder inlets 213, each having an air inlet valve which opens and closes in relationship with a rotational phase of a crankshaft in the engine, are provided for each cylinder, the independent air inlet pipe 211 is provided in one place or diverges according to the particular number of air inlets in the cylinder. Halfway on the independent air inlet pipe, an air flow control valve for controlling air flow is installed and also a fuel spraying device 215 is installed at a downstream side thereof to supply fuel in sprayed form into the independent air inlet pipe. An exhaust pipe 217 and the surge tank 205 or the air inlet pipe are connected by an exhaust recirculating route 219, and part of the exhaust gases taken out from the exhaust pipe is quantitatively controlled by a recirculated-exhaust control device 221 present halfway on the route and is then returned to the air inlet side. Each device mentioned above is a separate component and requires its own piping and wiring. During engine assembly, therefore, each such device needs to be piped and wired.

A flowchart of mixture formation in such an air inlet system is shown in Fig. 6. During the formation of the mixture to be supplied to each cylinder 209, the quantities of air, fuel, and exhaust recirculated are controlled by controlling three different devices, namely, the throttle device 203 existing halfway on the air inlet pipe 201, the fuel spraying device 215 existing halfway on the independent air inlet pipe 211, and the recirculated-exhaust control device 221 present halfway on the exhaust recirculating route 219. The response time for controlling the mixture state according to the particular engine output request and combustion state is determined as a result of considering, in addition to a respective own operating response time of the throttle device 203, fuel spraying device 215, and recirculated-exhaust control device 221, the time from the passage of air, fuel, and recirculated exhaust through each control device to respective arrivals at the cylinder.

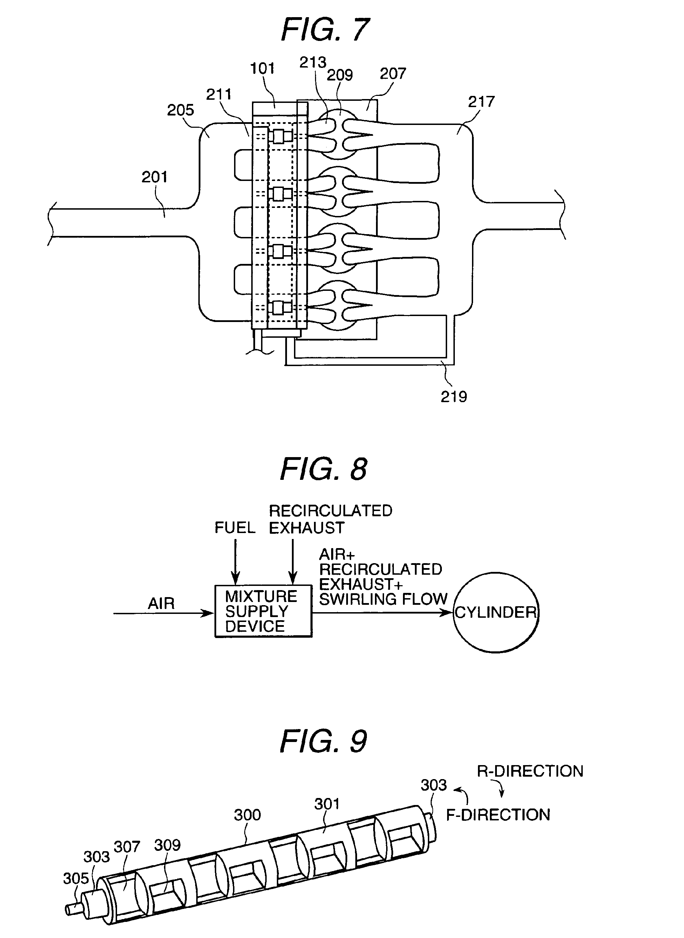

Fig. 7 shows the device configuration of the air inlet system in an engine which uses the mixture supply device in the present embodiment. As shown in this figure, the mixture supply device is installed halfway on the independent air inlet pipe 211. The exhaust recirculating route 219 extending from the exhaust pipe 217 and the fuel piping extending from the fuel pump are connected directly to the mixture supply device. Air, fuel, and recirculated exhaust are controlled at a position proximate to the cylinder, and since a delay in transport to the cylinder is reduced, rapid response can be achieved with respect to the accelerator operations of the driver. Since the multiple-throttle mechanism, fuel spraying mechanism, and exhaust recirculating mechanism in this mixture supply device are connected to the integrated controller through the internal wiring of the mixture supply device in order to obtain control signals and receive electric power, it is possible to reduce and adjust the quantity of wiring leading to an outside of the mixture supply device. Hereby, the engine assembly workload required can be reduced, in other words, manufacturing expenses can be reduced. A flowchart of mixture formation in such an air inlet system is shown in Fig. 8. Since the quantities of entry of air, fuel, and recirculated exhaust into the mixture are all controlled inside the mixture supply device 101, it also becomes possible to reduce variations in response to each quantity of entry. There is no need to separately install such throttle device 203 or recirculated-exhaust control device 221 as used in conventional structure. There is no problem, however, even if such devices are installed as countermeasures against trouble with the mixture supply device 101. In the conventional air inlet system configuration as shown in Fig. 5, since a downstream section of the cylinder is depressurized below atmospheric pressure by the throttle device 203, the air inlet pipe 201 and surge tank 205 at the downstream side are required to have a function that maintains pressure. When the mixture supply device in Fig. 7 is used, however, since an upstream side of the mixture supply device 101, i.e., a large portion at the air cleaner side is maintained at atmospheric pressure, there is no need to take a special measure for maintaining pressure at that section. For this reason, it becomes possible to manufacture the air inlet pipe and the surge tank at lower costs and thus to reduce engine manufacturing expenses.

An external view of the air flow control valve 123 is shown in Fig. 9. This valve is constructed of a rotary body 300, air flow controllers 301 formed in the rotary body 300, bearing-mounting sections 303, and an opening state sensor connector 305. In the air flow controllers 301, eight openings each corresponding to an inlet passageway, namely, inlet passageways 307 and 309 (hereinafter, described as openings), are formed for a cylindrical member of the rotary body 300. The low-flow opening 307 and the high-flow opening 309 control the quantity of inlet air for one cylinder. Both openings may be freely machined so as to exhibit different opening characteristics against circumferential rotations of the air flow controllers 301. In this example, however, the low-flow opening 307 is opened in an angle range twice that of the high-flow opening 309. The bearing-mounting sections 303 correspond to the bearings mentioned earlier in this Specification, and are built so as to be rotatable either in the direction of F or R inside the multiple-throttle mechanism 103. In other words, they are adapted to be rotatable in a reversibly bi-directional manner. The position sensor connector 305 connects with the throttle position sensor 131 and transmits rotational angle information of the air flow control valve 123 to the sensor.

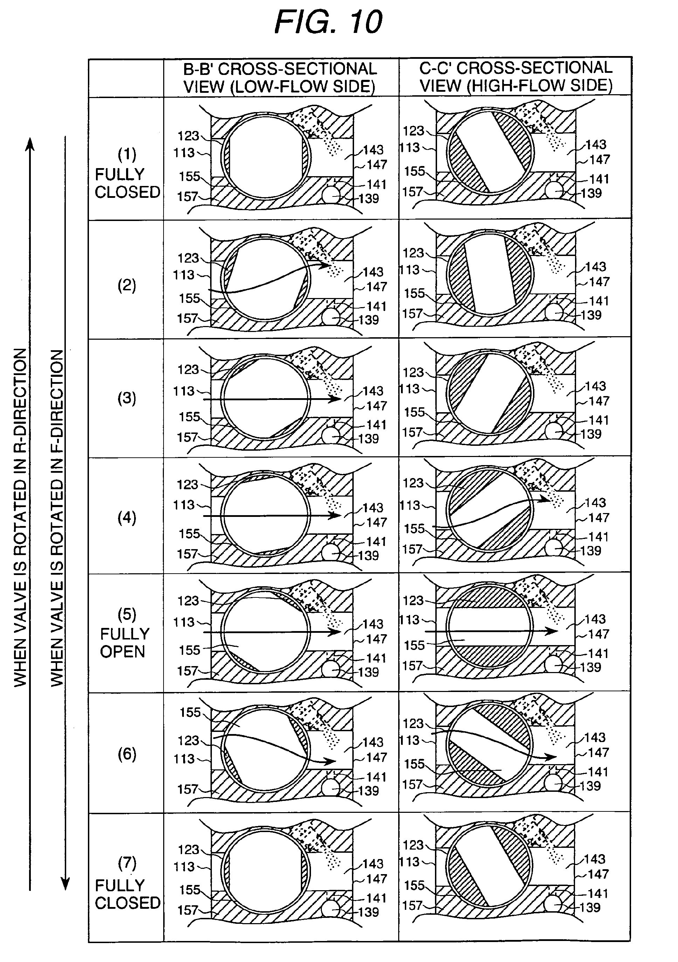

The operational characteristics of the air flow control valve 123 shown in Fig. 9 are described below using Fig. 10. The cross-sectional views of section B-B' in Fig. 10 show cross-sectional views of the section B-B' in Fig. 2, particularly of a section near an inlet passageway, and explain the characteristics of the air flow control valve 123 operating when air flows through the low-flow inlet passageway 143. Similarly, the cross-sectional views of section C-C' in Fig. 10 show cross-sectional views of the section C-C' in Fig. 2, particularly of a section near an inlet passageway, and explain the characteristics of the air flow control valve 123 operating when air flows through the high-flow inlet passageway 145. When the state in Fig. 10(1) is taken as an initial fully closed state and the air flow control valve 123 shown in Fig. 9 is rotated in the direction of F, the restriction gradually opens from the low-flow side with the high-flow side remaining in a fully closed state, and the low-flow side fully closes with the state of Fig. 10(3) being maintained. When, from this state, the rotary body 300 is further rotated in the direction of F, the restriction at the high-flow side starts to open with the low-flow side maintaining its restriction fully open, and soon, as shown in Fig. 10(5), the restrictions in both inlet passageways 310 and 311 fully open. When the rotary body 300 is further rotated in the direction of F, both the low-flow and high-flow sides reduce the sizes of the respective restrictions almost similarly and, as shown in Fig. 10(7), fully close the restrictions once again. Conversely, When the rotary body 300 is rotated in the direction of R, both the low-flow and high-flow sides, as shown in Fig. 10(6), increase the sizes of the respective restrictions similarly from the fully closed state in Fig. 10(7), and then as shown in Fig. 10(5), fully open the restrictions. When the rotary body 300 is further rotated in the direction of R, the restriction at the high-flow side, as shown in Fig. 10(4), decreases in size with the low-flow side maintaining its restriction fully open, and as shown in Fig. 10(3), only the restriction at the high-flow side fully closes. When, from this state, the rotary body 300 is further rotated in the direction of R, only the restriction at the low-flow side decreases in size with the high-flow side maintaining its restriction fully closed, and finally, fully closes as shown in Fig. 10(1). In this way, the air flow control valve 123 shown in Fig. 9 can be used in such a manner that depending on the rotational angle of the rotary body 300, the opening states of the restrictions are increased or reduced to provide the quantity of air passage with a difference between the low-flow and high-flow sides in the region from Fig. 10(1) to Fig. 10(5), or that the quantities of air passage at both the low-flow and high-flow sides in the region from Fig. 10(5) to Fig. 10(7) are increased or reduced to become equal. Also, whether the restriction opens from the fuel spraying mechanism within the inlet passageway or from the opposite side changes according to the particular direction of rotation. When the atomization of the fuel is to be accelerated in cases such as at low flow rate, the rotary body 300 is rotated in the direction of F, i.e., clockwise in Fig. 10. This starts opening of the restrictions from the one closer to the fuel spraying mechanism, thus concentrating a high-speed air stream at the fuel spraying mechanism or its fuel spraying port, and consequently inciting a collision between the air stream and fuel particles to atomize the fuel. Conversely, when the prevention of sticking to the wall surface of the inlet passageway is required more than the above, the rotary body 300 is rotated in the direction of R, i.e., counterclockwise in Fig. 10. This starts opening of the restrictions with the one more distant from the fuel spraying mechanism, thus concentratedly inducting an air stream to the vicinity of a location at which sprayed fuel collides with the wall surface of the inlet passageway, and consequently suppressing fuel sticking to the wall surface and removal of sticking fuel.

As described earlier in this Specification, recirculated exhaust is distributed, and enters, from the recirculated-exhaust entry port 141 smaller than the recirculated-exhaust distribution pipe 139 in terms of diameter, to the inside of each inlet passageway through the recirculated-exhaust distribution pipe 139 provided at the bottom of the multiple-throttle mechanism 103. As shown in the figure, a restriction is disposed adjacently not only to the fuel spraying port, but also to the recirculated-exhaust entry port 141, such that fuel, inlet air, and recirculated exhaust are efficiently mixed near an exit of the air flow control valve 123.

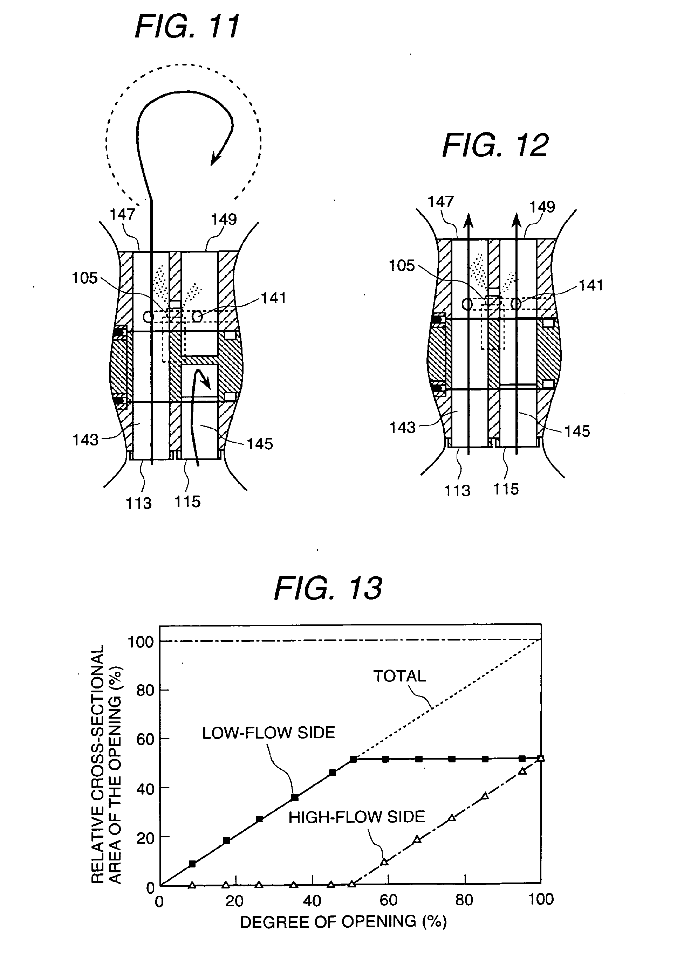

Even if the same quantity of air is to be supplied as the total, when control is used that provides a difference between the quantities of air passage through the inlet passageways at the low-flow and high-flow sides, it becomes possible to increase inertia by concentrating a greater quantity of air stream in the inlet passageway at the low-flow side and increasing velocity, and thus to more efficiently supply a larger quantity of mixture to the cylinder by utilizing the resulting inertial effect. Such an increase in the efficiency of air intake to this cylinder allows greater torque output to be obtained, even at the same engine speed, and as a result, fuel consumption in the entire automobile can be reduced. Also, as shown in Fig. 11, by providing a difference in the flow rate of the mixture flowing into two flow routes connected to one cylinder, a swirl flow inside the cylinder and, although not shown in the figure, vertical and other rotating flows can be activated. Control of these flows can not only increase the flame propagation rate during combustion and hereby yield greater engine output, but also improve the mixture state and the combustion state and reduce the occurrence of harmful exhaust. Conversely, even when air flow control valves of the same type are used, since the sizes of the restrictions in both the low-flow and high-flow inlet passageways can be equally increased/reduced by utilizing the region from Fig. 10(5) to Fig. 10(7), a mixture can also be supplied to the inside of the combustion chamber more smoothly by, as shown in Fig. 12, equally inducting air into both inlet passageways. Even when the same flow rate of air is required, in the case that, judging from the operating state of the engine and the accelerator operations of the driver, a larger quantity of air flow is necessary, the state as shown in Fig. 11 can be generated, or in the case that an even more equal flow is necessary, the state as shown in Fig. 12 can be generated.

As described above, in a mixture supply device for use in a multi-cylinder type of internal-combustion engine, installed so that inlet passageway sections connected to respective cylinders are diverged and then re-converge; the mixture supply device comprises: a first construction block in which a rotary body 300, a passageway section 310 formed inside the rotary body 300, and an opening 307 formed on part of an outer periphery of the rotary body 300 are constructed, and a second construction block in which a rotary body 300, a passageway section 311 formed inside the rotary body 300, and an opening 309 formed on part of the outer periphery of the rotary body 300 are constructed; and wherein: there is formed an air flow control valve 123 provided with a rotating device for rotating the rotary body 300 in a reversibly bi-directional manner, the air flow control valve 123 being further formed with a restricting portion at which restrictions in the above two construction blocks each change in shape according to a particular rotary motion of the rotary body; there is constructed a multiple-throttle mechanism 103 that contains the air flow control valve 123 inside; and there is provided a fuel spraying mechanism 105 having a fuel spraying port disposed in proximity to the restricting portion in the air flow control valve 123.

Also, in a mixture supply device for use in a multi-cylinder type of internal-combustion engine, installed on an air inlet pipe adapted so as to diverge and then re-converge inlet passageway sections connected to respective cylinders; the mixture supply device comprises: a first construction block in which a rotary body 300, a passageway section 310 formed inside the rotary body 300, and an opening formed on part of an outer periphery of the rotary body 300 are constructed, and a second construction block in which a passageway section 311 formed inside the rotary body 300 and an opening 309 formed on part of the outer periphery of the rotary body 300 are constructed; and wherein: there is formed an air flow control valve 123 provided with a restricting portion at which restrictions in the above two construction blocks change in shape so as to differ from each other according to a particular rotary motion of the rotary body 300; there is constructed a multiple-throttle mechanism 103 that contains the air flow control valve 123 inside; and there is provided a fuel spraying mechanism 105 having a fuel spraying port disposed in proximity to the restricting portion in the air flow control valve 123.

In addition, a mixture supply device for use in a multi-cylinder type of internal-combustion engine, installed on an air inlet pipe adapted to diverge and then re-converge air inlet passageway sections connected to respective cylinders; the mixture supply device comprises: a first construction block in which a rotary body 300, a passageway section 310 formed inside the rotary body 300, and an opening 307 formed on part of an outer periphery of the rotary body 300 are constructed, and a second construction block in which a passageway section 311 formed inside the rotary body 300 and an opening 309 formed on part of the outer periphery of the rotary body 300 are constructed; and wherein: there is formed an air flow control valve 123 provided with a restricting portion at which restrictions in the above two construction blocks change in shape so as to differ from each other when the rotary body 300 rotationally moves; there is constructed a multiple-throttle mechanism 103 that contains the air flow control valve 123 inside; there is provided a fuel spraying mechanism 105 having a fuel spraying port disposed in proximity to the restricting portion in the air flow control valve 123; and a recirculated-exhaust entry port 141 is disposed in proximity to the restricting portion in the air flow control valve 123, and an exhaust recirculating mechanism 107 is provided, so that controlled inlet air, sprayed fuel particles, and recirculated exhaust are mixed near a downstream side of the restricting portion.

Furthermore, in any one of the above-mentioned mixture supply devices for use in an internal-combustion engine, two restrictions are constructed in a rotational direction of each air flow control valve 123.

Besides, in any one of the above-mentioned mixture supply devices for use in an internal-combustion engine, a rotational angle of said rotary body is set for one restriction in the air flow control valve 123 to ensure that an outlet direction of inlet air faces the vicinity of the fuel spraying port 105 and that a high-speed air stream is supplied to the vicinity of the fuel spraying port 105 and then made to collide with a fuel injection stream sprayed therefrom.

Besides, in any one of the above-mentioned mixture supply devices for use in an internal-combustion engine, the opening 307 in the first construction block and the opening 309 in the second construction block are formed with different sizes, both openings being disposed so as to differ in a direction of opening.

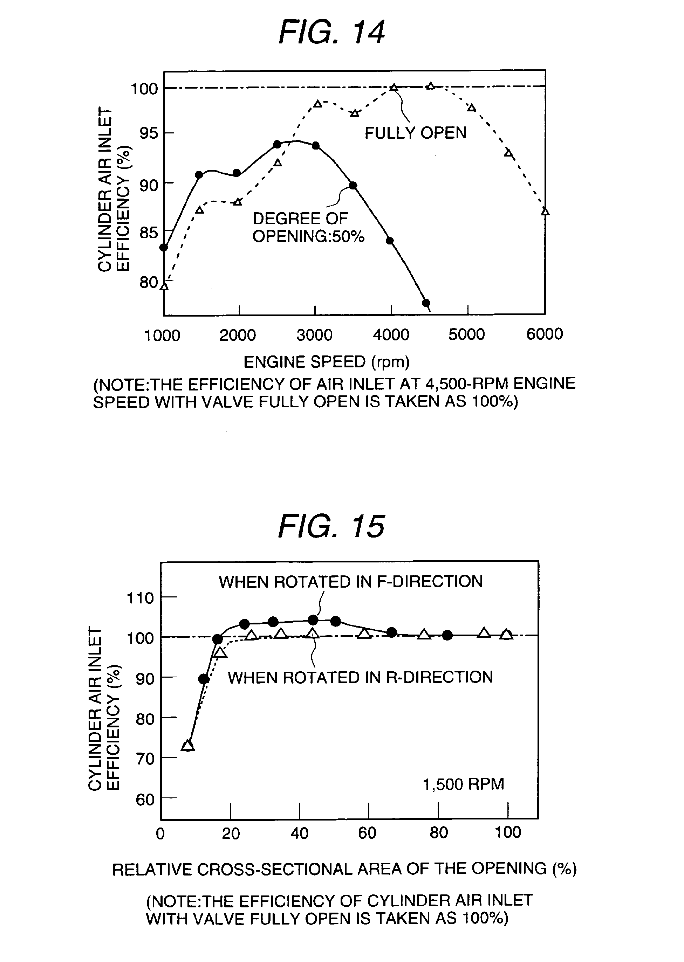

The change characteristics of the opening area with respect to the opening state existing when the air flow control valve shown in Fig. 9 is rotated in the direction of F and then changed from the fully closed state in Fig. 10(1) to the fully open state in Fig. 10(5), are shown in Fig. 13. The opening cross-sectional area within the inlet passageway, per cylinder with respect to the opening state, is determined by, at values up to the first 50%, the opening of the low-flow opening 307, and at greater values, the opening of the high-flow opening 309. Changes in the efficiency of cylinder air inlet with respect to engine speeds, measured when the mixture supply device using this valve in the multiple-throttle mechanism is applied to an in-line four-cylinder automobile engine having two inlets per cylinder, are shown in Fig. 14. The dashed line on the graph represents the relationship existing when the air flow control valve is fully opened as in Fig. 10(5), and the maximum value under this condition is taken as 100% on the Y-axis of the graph. The dashed line indicates that the efficiency of cylinder air inlet tends to become a maximum under the operating conditions existing when this engine revolves at 4,500 rpm, and to decrease at other speeds. The solid line on the graph represents the relationship existing when the air flow control valve is 50% opened and, as shown in Fig. 10(3), only the low-flow inlet passageway is fully opened. The solid line indicates that under the low-speed operating conditions of 2,500 rpm in engine speed, the efficiency of air inlet exceeds that obtained under the fully open states of both inlet passageways as denoted by the dashed line. These results indicate that when flow is concentrated in one inlet passageway, it is possible for a greater inertial effect to be created and, depending on operating conditions, for the efficiency of cylinder air inlet to be improved over that obtained in the case of full opening. In general, with higher efficiency of cylinder air inlet, greater torque can be generated at the engine speed. Such control of the air flow control valve, therefore, makes it possible to increase torque output under low-speed operating conditions of the engine and to reduce fuel consumption in the automobile by further balancing with respect to its transmission. The efficiency of cylinder air inlet, obtained when the opening cross-sectional area of the air flow control valve is changed during operation at an engine speed of 1,500 rpm, in particular, is shown in Fig. 15. The dashed line on the graph represents the relationship established when the air flow control valve of Fig. 9 is rotated from the fully closed state in Fig. 10(7), in the direction of R and changed to the fully open state in Fig. 10(5). As the opening cross-sectional area, i.e., the size of the opening in the restriction increases, the efficiency of cylinder air inlet increases and becomes a maximum under a fully open state. The solid line represents the relationship established when the air flow control valve of Fig. 9 is rotated from the fully closed state in Fig. 10(1), in the direction of F and changed to the fully open state in Fig. 10(5). In the region that the opening cross-sectional area becomes nearly 50%, i.e., that only the inlet passageway at the low-flow side is opened, the efficiency of cylinder air inlet increases to surpass the relationship represented by the dashed line when the restrictions at both sides are equally opened, and the corresponding maximum value exceeds about 5%. In the region where the opening cross-sectional area exceeds 50% and both restrictions open, a relationship almost equal to that represented by the dashed line is obtained. As described above, in the mixture supply device using such air flow control valve as shown in Fig. 9, since the torque output of the engine tends to differ according to the particular opening states of both inlet passageways, not only the sizes of the respective restrictions, even if the opening of the restrictions is increased with the accelerator operations of the driver, torque output does not always increase in proportion to that increase. Accordingly, the integrated controller considers the accelerator operations of the driver, the operating state of the engine, and the opening state of the air flow control valve, and efficiently controls the output of the engine by controlling the air flow control valve so as to provide the engine output requested by the driver. For example, when torque output can be increased by only half-opening the valve rather than by fully opening it, even if the driver fully steps on the accelerator, a command is issued that only half-opens the restricting portion.

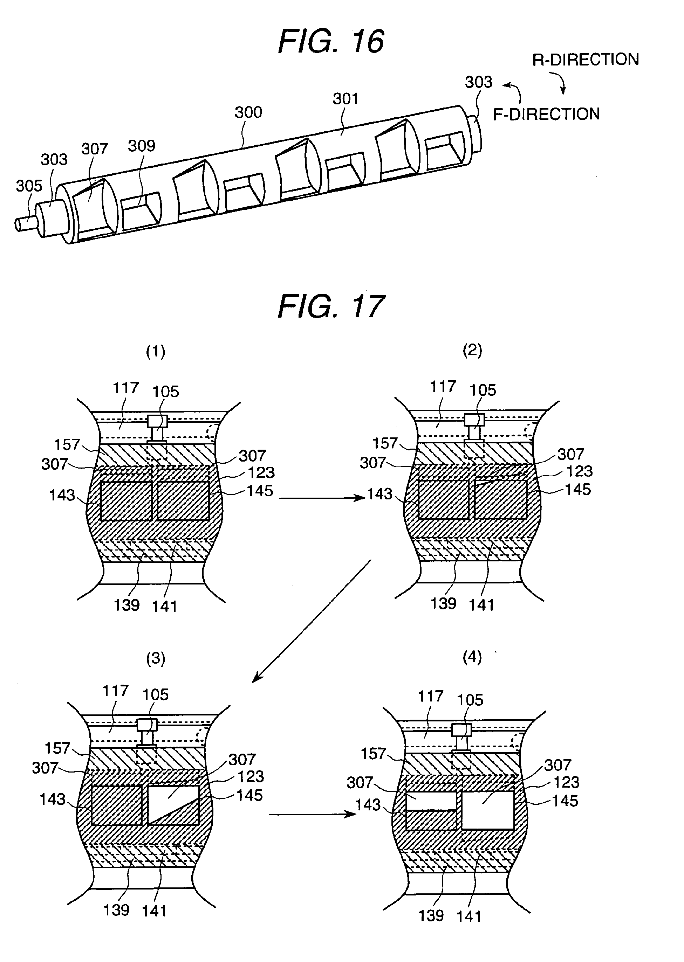

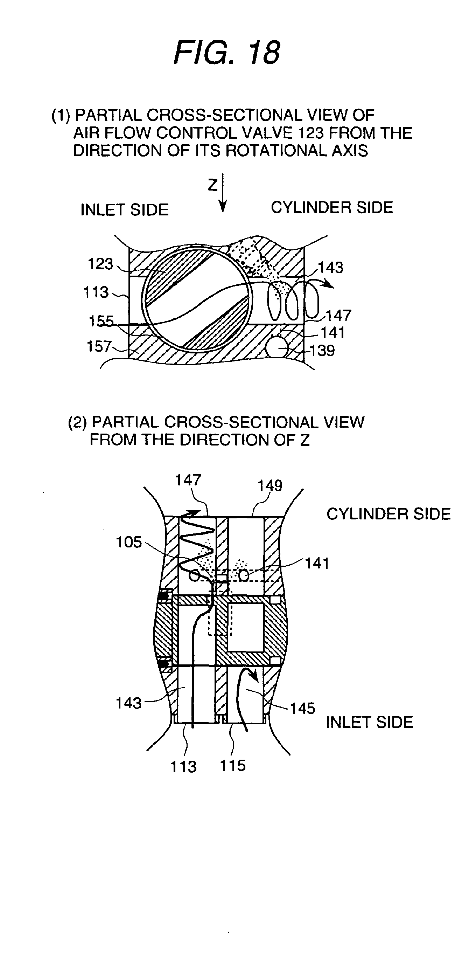

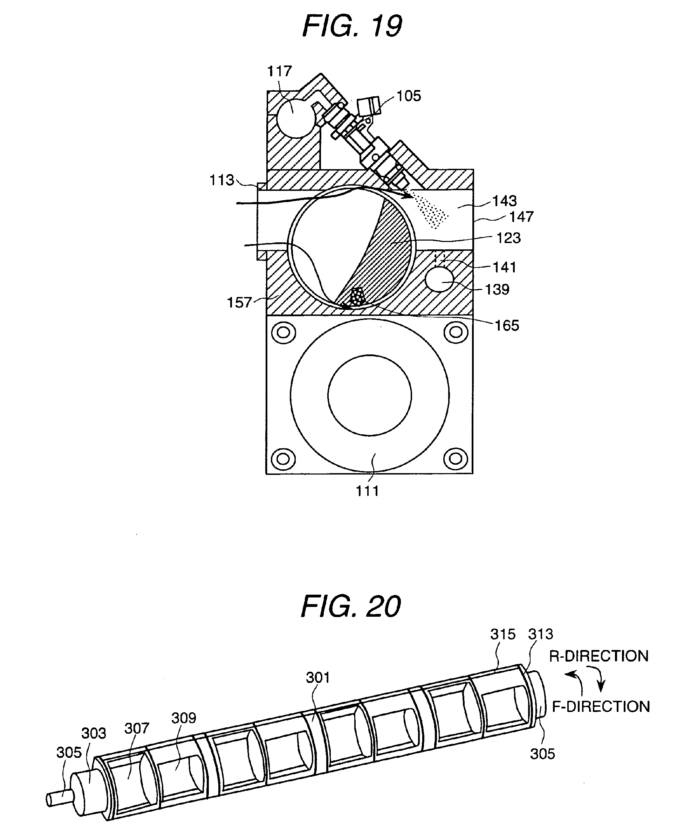

Alternatively to the shapes shown in Fig. 9, the shapes of the low-flow opening 307 and high-flow opening 309 machined in the air flow control valve 123 are determined so as to fit the particular purpose of control and the characteristics of the engine applied, and both openings are freely machined in the air flow controllers 301. For example, the air flow control valve of Fig. 16, when rotated in the direction of F to open the restrictions, has the characteristic that the low-flow opening 307 gradually opens from a corner close to the fuel spraying port. Fig. 17 is a set of partial cross-sectional views showing, from the outlet side, the inlet passageway for one cylinder, in the multiple-throttle mechanism using this valve. When, from its fully open state in Fig. 17(1), the air flow control valve shown in Fig. 16 is rotated in the direction of F, opening of the restriction is, as shown in Fig. 17(2), started from the side close to the top of the fuel spraying section 105 of the low-flow inlet passageway 145, thereby, as shown in Fig. 17(3), increasing the opening of the restriction at the low-flow side. When the restriction at the low-flow side completely opens, the restriction at the high-flow side starts opening as in Fig. 17(4) and soon fully opens. The states hereafter are the same as those of the valve shown in Fig. 19. Under the states (2) and (3) of Fig. 17, since, inside the low-flow inlet passageway 145, the restriction opens in offset form towards an upper left portion of the view, the air stream, after passing there, activates the flow state within the inlet passageway by, for example, generating a swirl motion of the air therein as shown in Fig. 18, or generating some other rotary motion, although not shown in the figure, depending on the particular opening shape of the restriction. The occurrence of this swirl flow or the activation of the flow status improves the mixed states of air, fuel, and recirculated exhaust, in the mixture, and also contributes to activated air flow inside the cylinder, improved flame propagation rate during combustion, and improved combustion state, with the result that the occurrence of harmful exhaust can be suppressed.

Although the air flow control valve shown in Fig. 9 is formed with a restriction at both inlet and outlet sides of the valve, a restriction may likewise be formed only at one side, as shown in Fig. 19. There is no need to allow for variations in the opening of both restrictions, and the quantity of air inlet can be stably controlled.

In the air flow control valve according to the present invention, the inlet air and mixture leakage that occurs between the inlet and outlet sides or between adjacent inlet passageways, even when the valve is fully closed, is shut off or reduced by the following sealed structure. That is, the above-mentioned leakage is reduced by reducing, to a radial clearance of 0.2 mm or less, a clearance present between an outer surface of the air flow control valve 123 which is a rotary body, and a holed inner surface of the casing 157 in which the valve is enclosed, and providing a sealing portion that excessively increases a pressure loss in comparison with the surrounding inlet passageways. Or the structure may be adopted that assigns an integrated sealing function to a sealing mechanism 165 becoming convex relative to other sections, by providing the air flow control valve 123 with the sealing mechanism 165 and bringing this section and the casing 157 into contact or reducing a clearance present between both to 0.2 mm or less. By employing such structure, a high sealing effect can be maintained without the necessity for not too significant improvement of machining accuracy during extensive machining of the air flow control valve. The sealing portion may be formed by machining a recess in the air flow control valve itself or by building other sealing members into the air flow control valve.

The sealed structure in an air flow control valve of the type formed with a restriction at both inlet and outlet sides in the passageway section of the valve is shown in Fig. 20. In this air flow control valve 123, guide grooves for accommodating each sealing member are machined. Arc-like inter-cylinder sealing members 313 are installed in guide grooves each machined so as to be axially across a low-flow opening 307 or a high-flow opening 309, and a movable sealing member 315 is installed in a guide groove machined longitudinally in an axial direction of the valve. The inter-cylinder sealing members 313 come into contact with surfaces of the guide grooves in the air flow control valve 123, and with an inner wall surface of a valve insertion hole 317 which contains the air flow control valve 123 in a casing 157, and reduce leakage by blocking flow routes disposed between adjacent air inlet passageways.

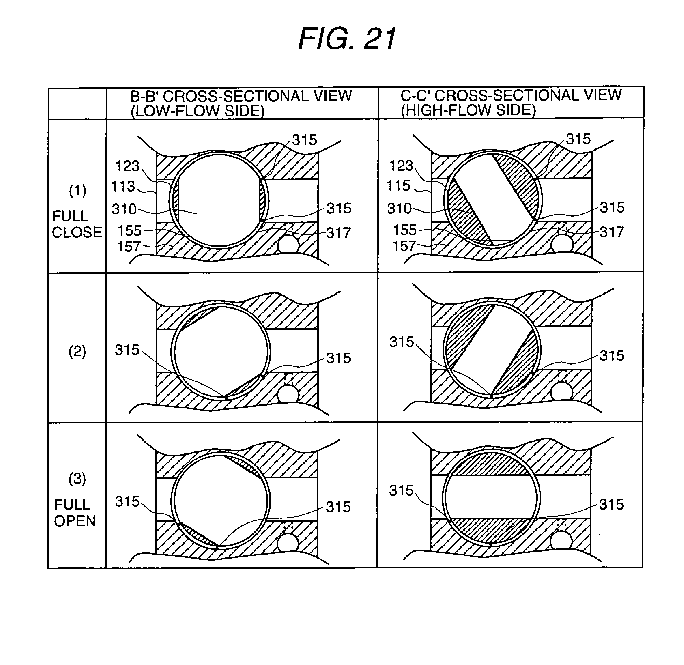

How the sealed structure works during the operation of the air flow control valve shown in Fig. 20 is illustrated in Fig. 21. As with that of Fig. 10, Fig. 21 is organized so that its left side is an upstream side, and its right side, a downstream side. The movable sealing member 315 is installed at two circumferential angles on the outer periphery of the air flow control valve. From the fully closed state shown in Fig. 21(1), the air flow control valve 123 rotates clockwise in the figure. Under the fully closed state shown in Fig. 21(1), the inlet passageways are dimensionally minimized by the valve, and the leakage flow route where air flows from the upstream side to the downstream side becomes a clearance occurring between the air flow control valve 123 and the valve insertion hole 317. In the structure according to the present invention, this clearance is sealed as a result of the movable sealing member 315 coming into contact with the surface of the corresponding guide groove and the inner surface of the valve insertion hole, or even if no such contact occurs, is sealed as a result of the movable sealing member 315 moving close since it is in an extremely narrowed condition, and leakage of the air flowing through the clearance is suppressed significantly. Under the fully closed or slightly closed state of the air flow control valve, since the cross-sectional areas of the air inlet passageways are reduced significantly, a pressure difference occurs between the upstream and downstream of the air flow control valve. Under the rotated and opened state of the valve as in Fig. 21(2) or (3), however, the above-mentioned pressure difference is small or becomes almost equal to zero.

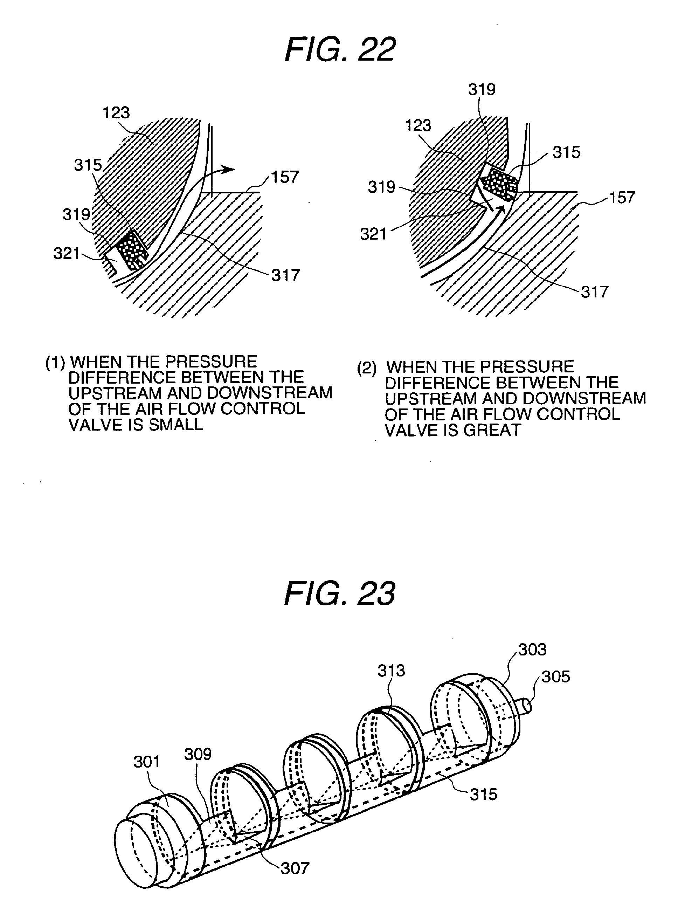

An enlarged partial cross-sectional view of the vicinity of the movable sealing member 315 in Fig. 21 is shown in Fig. 22. A guide groove 319 is machined in the air flow control valve 123, and this guide groove accommodates the movable sealing member 315 and has a holding air passageway 321. The movable sealing member 315 is movable in the range of a clearance, so-called the range of play, relative to the guide groove 319. As the rotational phase of the air flow control valve 123 approaches a full closing position thereof, a significant increase in flow route resistance increases the pressure difference between the upstream and downstream of the air flow control valve, consequently allowing a strong air stream to flow from the high-pressure upstream side into the holding air passageway 321. The above-mentioned air stream applies thrust to the movable sealing member 315, which then slides in an outward direction of the air flow control valve, along the guide groove 319, and further reduces the clearance with respect to the inner surface of the valve insertion hole 317 in the casing 157. Eventually, the air stream is pressed against the inner surface of the valve insertion hole 317, hereby creating a contact sealing effect. Conversely, as the air flow control valve rotates to its opening side and thus the pressure difference decreases, since holding force applied to the movable sealing member 315 is reduced significantly, this sealing member does not come into contact with the inner surface of the valve insertion hole 317, or even if the sealing member comes into contact, the contact force is very weak. The resulting sealing effect is primarily a non-contact type of gas sealing effect so-called the labyrinth effect that enlarges or reduces the cross-sectional area in the flow route communicating with the clearance, or more effectively, generates a pressure loss by repeating the enlarging and reducing cycles several times.

Fig. 23 shows the sealed structure in an air flow control valve of the type formed with a restriction in one place at a passageway section of the valve. This air flow control valve, as with the valve shown in Fig. 20, is applied to an in-line four-cylinder engine having two inlets per cylinder, and four cylinders of air inlet is controlled by one such valve. Construction blocks functioning as two types of valve bodies for each air inlet passageway corresponding to one cylinder are provided, with one construction block forming a low-flow opening 307 and the other construction block forming a high-flow opening 309. Rotation of the air flow control valve 123 is able to provide control to ensure that opening is started only from a left half of the air inlet passageway in the figure and that after the left half fully opens, a right half opens. It is thus possible to form a uniform flow horizontally in the air inlet passageway and to control the flow motion therein, and furthermore, a flow motion in the cylinder interior functioning as the combustion chamber of the engine. In this air flow control valve, guide grooves for accommodating sealing members are also machined, inter-cylinder sealing members 313 are installed circumferentially in an axial direction of the valve, and a movable sealing member 315 is installed in a longitudinally in the axial direction of the valve.

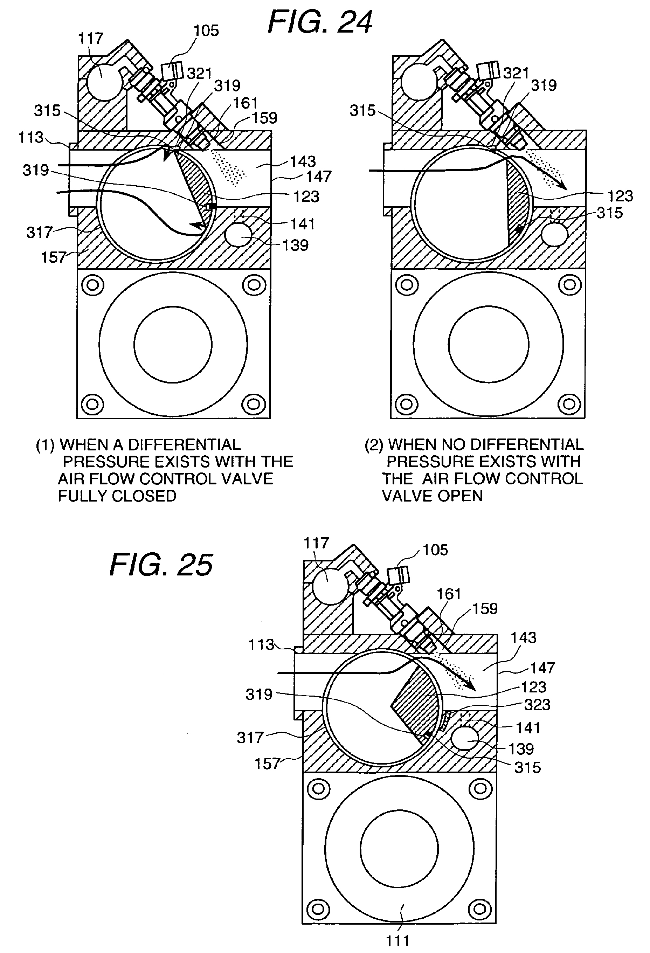

A cross section of the vicinity of the low-flow opening in the mixture supply device 101 within which the corresponding air flow control valve is stored is shown in Fig. 24. A left side in this figure is the upstream side in the direction of the air cleaner, and a right side is the downstream side in the direction of the cylinder. The movable sealing member 315 is installed at the side of the air flow control valve 123 and at the side of the valve insertion hole 317 in the casing 157. At the side of the air flow control valve 123, as described earlier, a movable sealing member 315 is accommodated in a guide groove 319. At the side of the casing 157, a holding air passageway 321 and a guide groove 319 are also machined and a movable sealing member 315, although its shape differs from that of the one installed at the air flow control valve side, is accommodated. The movable sealing member 315 shown here is of the type having a beam-like end fixed to the side of the casing 157, and in the event that a pressure difference occurs, the beam-like portion deforms, hereby acting to press a sealing material of the sealing member against the outer surface of the air flow control valve 123. A similar effect is also obtainable in a structure not having a fixed portion of the beam-like portion. Under the above scheme, however, when there exists no pressure difference, the pressing force of the sealing material against the air flow control valve is reliably reduced, which yields a great suppression effect against increases in the torque required for rotational driving of the valve.

Although, in these examples, the movable sealing member is installed in two places in a circumferential direction of the rotary valve, in the event that the minimum leakage flow rate is permitted to a certain extent and more importance is to be attached to reduction in the torque required for the driving of the rotary valve, the movable sealing member is installed in one place to obtain the balance between the sealing effect and the suppression of increases in torque. Also, although the inter-cylinder sealing members 313 and the movable sealing member 315 are formed separately in the foregoing embodiment, both types of sealing members may be connected and integrally formed. Under such a scheme, although the workload required for mounting in the air flow control valve is reduced by a decrease in the number of parts required, it is advisable in that case to make the connections easily deform so that the deformation of the movable sealing member in the vicinity of the connections moves a great majority of movable seals to make the sealing effect variable.

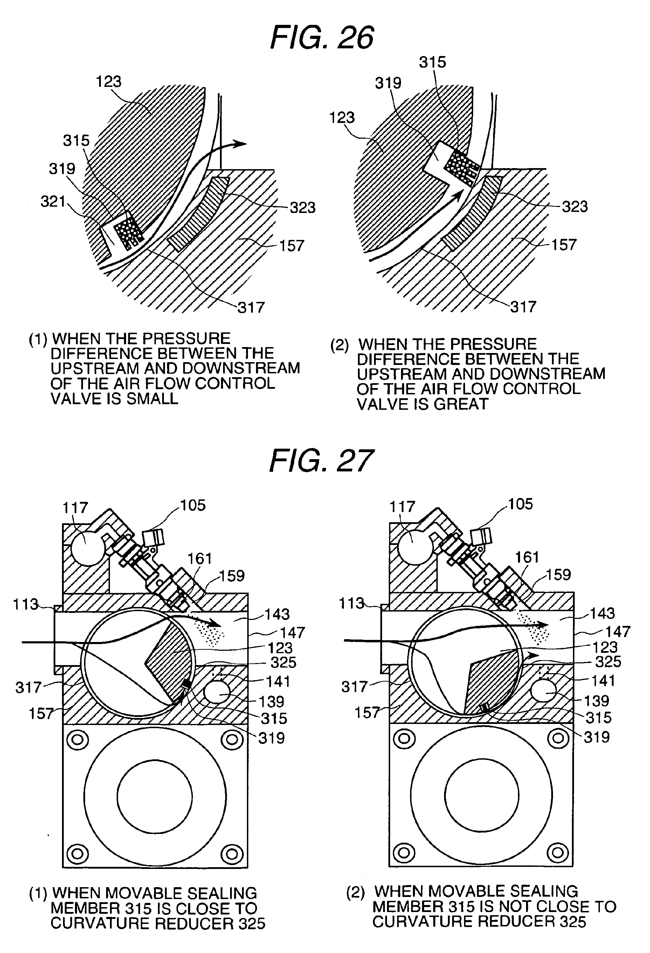

In the sealed structure cross-sectional shown in Fig. 25, the sealing effect is made variable using magnetic force. Referring to this figure, the movable sealing member 315 is formed of a resin material in which magnetic particles are contained. An electromagnet 323 is inserted into a seal reinforcement portion at the valve insertion hole 317 of the casing 157. The movable sealing member 315 usually has its movement gently regulated with a backlash by a guide groove 319. The operation of the movable sealing member 315 in the neighborhood of the seal reinforcement portion in Fig. 25 is shown in Fig. 26. When the movable sealing member 315 moves close to the seal reinforcement portion and a sealing effect is required, a strong magnetic field is generated by energizing the electromagnet 323, and thereby the movable sealing member 315 is attracted towards the inner surface of the valve insertion hole 317 and eventually brought into contact. The movable sealing member 315, if controllable by means of the electromagnet, is capable of exhibiting a similar effect, and the magnetic material itself may be used as a sealing material, or the magnetic material may be built into a sealing material made of resin or the like. In either case, differences in machinability and weight occur, but a similar effect is obtainable. Also, the seal reinforcement portion may have an installed permanent magnet, instead of the electromagnet. In this case, there is the advantage that no electric circuitry becomes necessary.

Fig. 27 shows a structure in which, in the valve insertion hole 317 of the casing 157, a curvature reducer 325 whose section equivalent to the low-flow inlet passageway 143 or the high-flow inlet passageway 145 is smaller than other sections in terms of the curvature of a curved face is provided and at the corresponding section, the distance between the air flow control valve 123 and the inner surface of the valve insertion hole 317 becomes narrower than at other sections. When rotation of the air flow control valve 123 causes the movable sealing member 315 to reach the curvature reducer 325, since the movable sealing member 315 comes into contact with the inner surface of the valve insertion hole 317 and is hereby pushed in a central direction of the air flow control valve 123 along the guide groove 319, the clearance decreases for increased sealing effect. Eventually, the movable sealing member 315 comes to be completely sandwiched between the air flow control valve 123 and the casing 157, thus increasing the contact force by means of elastic spring force, and enhancing the effectiveness of contact sealing. Since, except at the curvature reducer 325, a movable sealing member 127 does not come into contact or, even if contact occurs, the contact force is very weak, increases in the torque that rotates the air flow control valve 109(?) are suppressed.

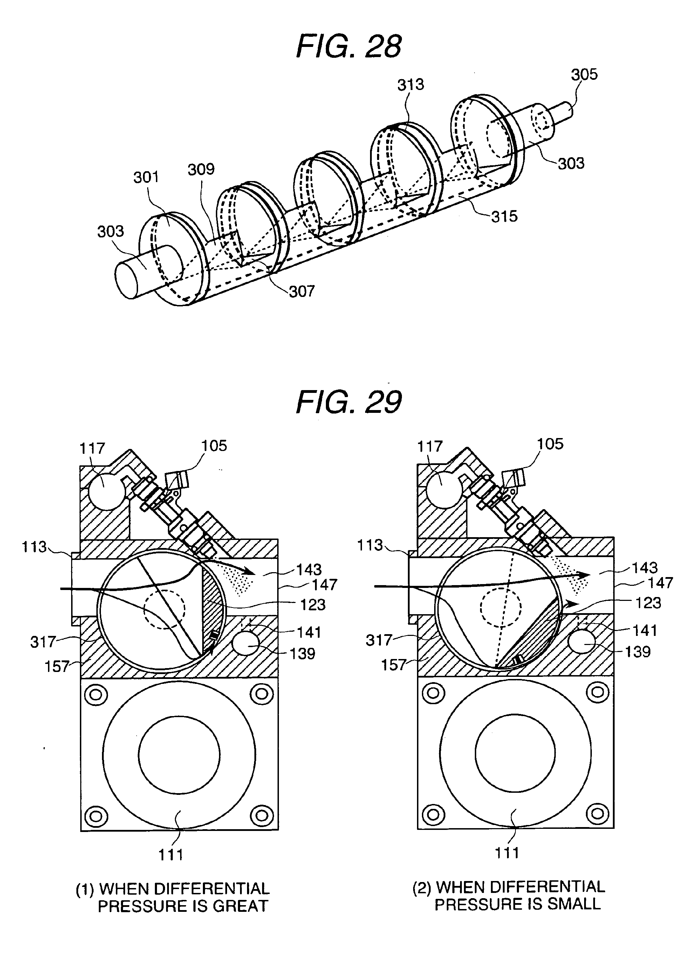

Structure in which a sealing effect of a movable sealing member 315 is made variable by utilizing a force generated when an air flow control valve 123 is deformed by the occurrence of a pressure difference between the upstream and downstream of the valve, is shown in Fig. 28. In this air flow control valve 123, the diameters of sections equivalent to bearing installation sections 303 at both ends are particularly small and locally deformed. When a pressure difference occurs between the upstream and downstream of the air flow control valve 123, bending deformation occurs mainly at those sections. Resultingly, as shown in Fig. 29(1), a valve body of the air flow control valve 123 becomes proximate to an inner surface of the valve insertion hole 317 to narrow a clearance existing therebetween. In the air flow control valve 123, guide grooves 319 that accommodate sealing members are formed. Arc-like inter-cylinder sealing members 313 are inserted circumferentially in an axial direction of the valve, and a movable sealing member 315 is inserted longitudinally in the axial direction of the valve. When there is no pressure difference as shown in Fig. 29(2), the movable sealing member 315 creates a non-contact sealing effect that narrows the cross-sectional area of the flow route. As a pressure difference occurs and increases, however, the movable sealing member 315 is, as shown in Fig. 29(1), pushed towards the valve insertion hole 317 by a displacement of the air flow control valve 123, and eventually comes into contact to physically block the flow route and thus to generate a contact sealing effect.

In these embodiments, the sealed structure may likewise be formed at the casing side on the basis of a similar concept. By doing so, a stable sealing effect is obtainable, even if the rotating range of the air flow control valve is extended.

It is also possible to prevent the entire valve from clogging with any entrapped foreign substances by making the sealed structure easily deformable and movable as described in these embodiment.

The materials of the inter-cylinder sealing members 313 and movable sealing member 315 in these embodiments are selected from the group consisting of metals, resin, rubber, ceramics, or the like. To reduce load torque, it is effective to use resin materials excellent in lubrication characteristics, such as fluorinated resin, polyether-ether-ketone (PEEK) resin, polyimide resin, polyamide resin, or polyphenylene sulfide (PPS) resin.

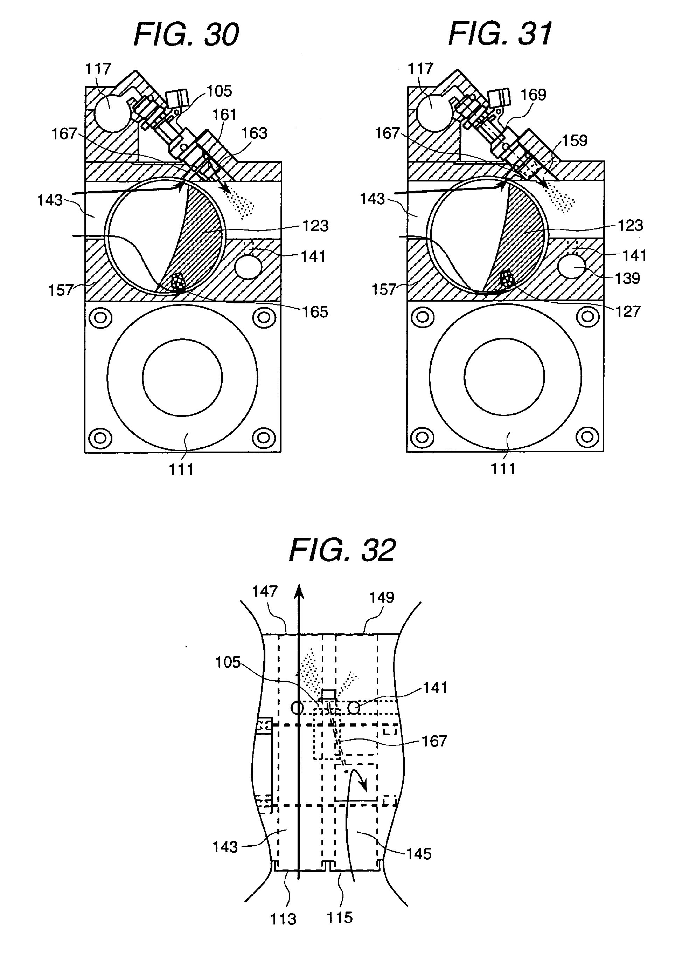

Inside the mixture supply device, fuel particles are atomized by, as shown in Fig. 4, inducting an air stream into the main body or fuel spraying port of the fuel spraying mechanism 105 by means of an air flow control valve 123 installed in proximity to the fuel spraying mechanism, and then bringing the air stream and the fuel particles into a collision. In particular, the atomizing effect of fuel particles can be enhanced by, as shown in Figs. 17 (2) and 18, supplying an air stream in deflected form to the fuel spraying port and making a high-speed air stream collide concentratedly with a fuel immediately after it is emitted from the spraying port. Or as shown in Fig. 30, an air-assist-type mount 163 is formed in the casing 157 of the multiple-throttle mechanism and an air stream is inducted into the mount through an assist air supply passageway 167. The air-assist-type mount 163 is formed so that a clearance created between a fuel spraying port 161 of the fuel spraying mechanism 105 at which the mount is to be installed, and a bottom of the mount, is narrowed below 2 mm to allow an air stream to collide, almost perpendicularly to a fuel spraying direction, with a fuel immediately after it is emitted from the spraying port, and the collision further atomizes the fuel. The use of this method makes it possible to obtain fine-droplet fuel particles effectively, even if the fuel spraying mechanism 105 itself does not have a special atomizing structure, and to construct the fuel spraying mechanism less expensively. Accordingly, even when the fuel spraying mechanism requires replacement associated with an extended period of use, replacement expenses can be reduced. Or as shown in Fig. 31, in a mount 159 machined in the casing 157 of the multiple-throttle mechanism, an air-assist-type fuel spraying device 169 in which is contained a mechanism capable of being supplied with air from outside and of atomizing fuel particles emitted from the air-assist-type fuel spraying device itself is installed and an air stream is supplied thereto through the assist air supply passageway 167. The use of this method also allows an atomizing effect to be obtained. In this method, accuracy in the machining of the casing and in the assembly of the mixture supply device is not affected significantly and this allows stable atomization of fuel. The position in which the assist air supply passageway 167 in the structure shown in Fig. 30 or Fig. 31 communicates with an inlet passageway to take in an air stream is provided either at the same position as that of the air flow control valve or at an upstream side thereof, and the air stream is taken in by utilizing the pressure difference with respect to a downstream side of the air flow control valve. In Fig. 30 or Fig. 31, an inlet of the assist air supply passageway 167 is provided at where the air stream concentrates along the profile of the valve under its slightly open state in order for pressure to increase above an ambient pressure. In such structure, a greater atomizing effect can be obtained by supplying a higher-speed air stream under a slightly open state, in particular. Also, in the event that as in Figs. 10(1) to 10(3), a mixture is usually to be formed by opening only the restriction in the low-flow inlet passageway, the inlet port of the assist air supply passageway 167 is provided in a high-flow inlet passageway as shown in Fig. 32. Although the pressure at the low-flow side is reduced by the opening of its restriction, a more stable fuel-atomizing effect can be obtained under a slightly open state by supplying an air stream at high pressure from the high-flow side whose restriction does not open.

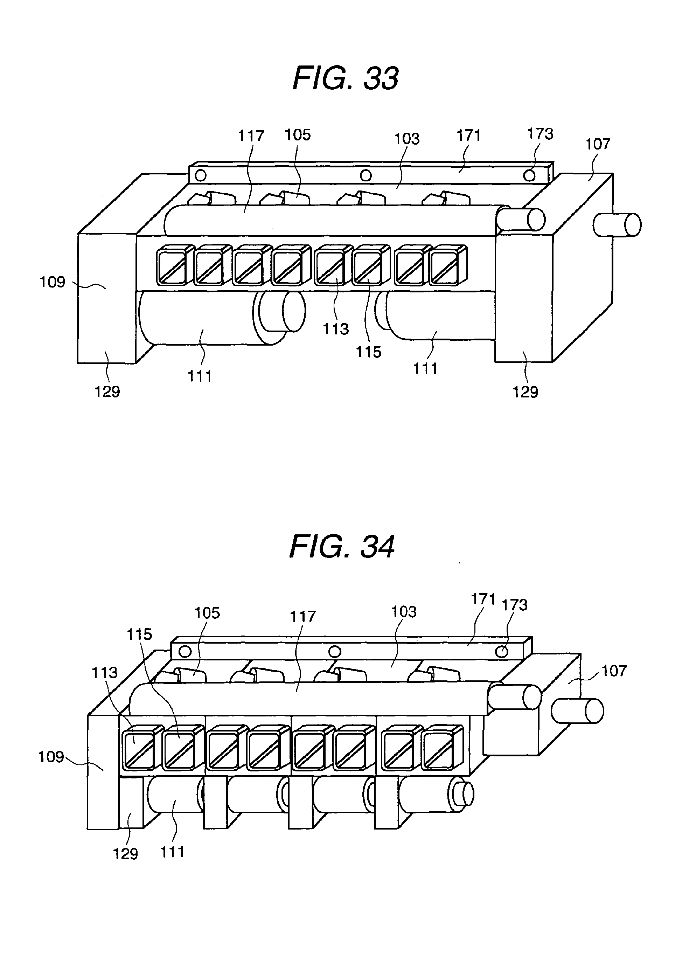

Under the embodiment shown in Fig. 1, in the multiple-throttle mechanism 103 of the mixture supply device 101 directed for an in-line four-cylinder automobile engine having two inlets per cylinder, the air flow control valve 123 that integrally controls four cylinders of inlet air is driven by one motor 111. This scheme has the characteristic that since the number of motors to be used for air flow control is one, inexpensive manufacturing is possible. Or as shown in Fig. 33, it may be possible to adopt a type in which are built two sets comprising air flow control valves, motors, and drives corresponding to two cylinders of air inlet. In this case, since, compared with the structure shown in Fig. 1, the air flow control valve dimensions per motor can be reduced, it is possible to obtain such features as allowing the driving force required of the driving motors to be minimized, valve driving to be increased in responsiveness, any effects of thermal deformation in an axial direction of the valve to be minimized, and control accuracy of air streams to be improved. Furthermore, any air inlet variations per cylinder that occur for reasons such as the possible nonuniformity of valve machining accuracy or deposition of foreign substances, are easily corrective by providing correspondingly the number of throttle position sensors required. Variations in air inlet per cylinder are derived by measuring the pressures at the upstream and downstream sides of the air flow control valve by use of pressure sensors or measuring the differential pressure between both sides and then calculating, at the integrated controller, the flow rate of air from the relationship with the opening size of the restriction according to the valve position, or by taking into the integrated controller the output from either a sensor for detecting the oxygen concentration in after-combustion exhaust, or an air-fuel ratio sensor for measuring the ratio between air and fuel, and then estimating actual variations in air inlet for each cylinder. Or such a type as shown in Fig. 34 may be usable that has four built-in sets each comprising an air flow control valve, motor, drive, and throttle position sensor corresponding to one cylinder. It is possible under this scheme to determine the quantity of mixture inlet for each cylinder and to control a fine-droplet mixture flow rate reduced in fluctuations. Furthermore, it may be possible to connect four units on each of which a fuel spraying mechanism, a throttle mechanism casing, an air flow control valve, a throttle position sensor, and a motor are constructed for one cylinder, and finally, to construct one mixture supply device. This construction method makes it possible to assemble the mixture supply device in response to different inter-cylinder distances and hereby to apply the mixture supply device easily to a number of types of engines.

As set forth above, according to the preferred embodiments of the present invention, the following mixture supply device is constructed:

A mixture supply device used in a multi-cylinder internal-combustion engine for automobiles, of the type in which, in a multiple-throttle mechanism having an air flow control valve able to be formed with one or more restrictions halfway in each of inlet passageways connected to respective cylinders, and varying the shapes of the restrictions by rotating the air flow control valve by means a motor, are assembled: motor-driven fuel spraying mechanisms each corresponding to one cylinder; a motor-driven exhaust recirculating mechanism for collecting part of the exhaust generated by combustion of a mixture in the above-mentioned internal-combustion engine and then remixing the exhaust into the above-mentioned mixture; and an integrated controller for simultaneously exchanging control signals with the above-mentioned three types of mechanisms.

The foregoing mixture supply device, wherein the air flow control valve contained in the multiple-throttle mechanism is capable of being independently formed with a restriction in a plurality of inlet passageways, of being formed with restrictions of different shapes for each inlet passageway, even at the same rotational angle, and thereby controlling the quantity and velocity of mixture discharged into the inlet passageway, and of changing the direction of an air stream after its passage through a restriction, to the original inlet direction, and thus controlling the swirl motion and other flow motions of the air in the mixture flowing inside the inlet passageway.

The foregoing mixture supply device, wherein the fuel spraying mechanisms are disposed so as to correspond to respective cylinders, with spraying ports of these fuel spraying mechanisms being positioned downstream with respect to the air flow control valve, closer to the cylinders, in the inlet passageways, and spraying a fuel towards the inside of each inlet passageway.

The foregoing mixture supply device, wherein, by use of the air flow control valve contained in the multiple-throttle mechanism, an air stream faster than an average air velocity in the inlet passageway can be supplied to the inside of the fuel spraying mechanism or to the vicinity of its spraying port and the fast air stream can be made to collide with a fuel immediately after its exit from the internal spraying port of the fuel spraying mechanism.

The foregoing mixture supply device, wherein a recirculated-exhaust distribution passageway for distributing to each inlet passageway the exhaust previously controlled by the above-mentioned exhaust recirculating mechanism is built into the multiple-throttle mechanism, and wherein a recirculated-exhaust entry port communicating with each inlet passageway, from the recirculated-exhaust distribution passageway, is opened both at a downstream side facing the cylinder, with respect to the air flow control valve, in the inlet passageway, and at a location other than a position in a circumferential direction of the inlet passageway where exists the fuel spraying port of the fuel spraying mechanism.

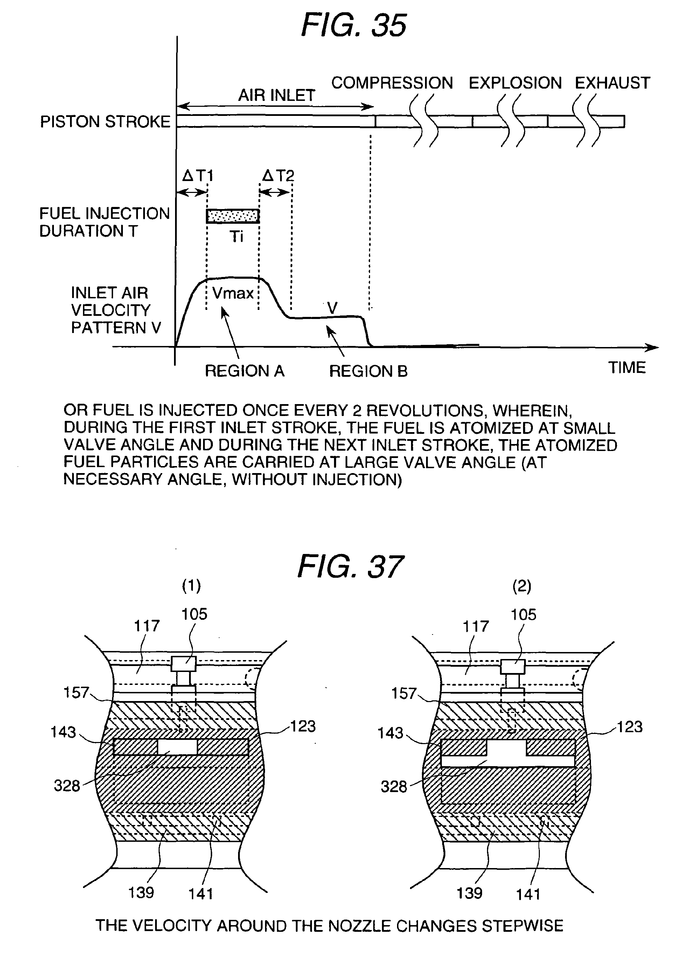

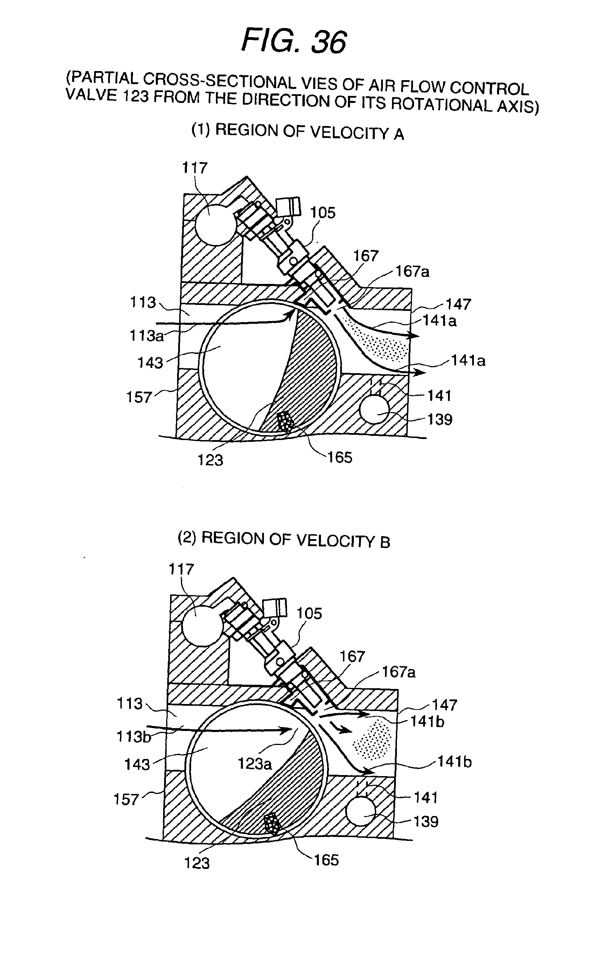

Figs. 35 to 40 show embodiments pertaining to the formation of a mixture during engine start using the mixture supply device. The rotating state of the air flow control valve 123 and a method of setting the injection timing of the fuel spraying mechanism 105 are described below using Figs. 35 and 36.

Piston strokes, a fuel injection duration T, and an inlet air velocity pattern V are shown in Fig. 35. Fuel injection (pulse width: Ti) is set with a delay time of ΔT1 assigned initially during the air inlet stroke interval of the engine. The inlet air velocity is controlled so that in response to the thus-set injection timing, the velocity reaches a maximum velocity of Vmax (region A) during the injection pulse width of Ti and then after the end of the injection pulse, is changed to a desired velocity of V (region B) with a delay time of ΔT2.

Fig. 36 shows the operating state of the air flow control valve 123 that correspond to the above velocity pattern. Fig. 36(1) shows velocity region A, wherein an air stream 113a flows through an assist air supply passageway 167 communicating with the opening in the air flow control valve 123, then passes around a nozzle injection hole in the fuel spraying mechanism 105, and discharges from an opening 167a in the above supply passageway. In this opening 167a, the air stream collides with fuel particles, hereby atomization being accelerated. Also, downstream from the opening 167a, an air stream 141 a flows in such a manner that it encompasses the atomized fuel particles to suppress their sticking to a wall surface of the passageway. Fig. 36(2) shows velocity region B, wherein the air flow control valve 123 has its opening 123a further spread, an air stream 113b flowing in from the opening 123a flows to the downstream of the opening 167a in the assist air supply passageway 167, and an air stream 141 b pushes injected fuel particles from rear and carries the particles in encompassing form.

Although a rotary valve is used as the air flow control valve 123, in comparison with two inlet passageways limited to the use of a butterfly valve, there are a number of advantages such as local obtainability of high-speed air streams and high flexibility of openings in shape. Also, since the fuel spraying port of the fuel spraying mechanism 105 is provided downstream from the air flow control valve 123, it is possible to avoid the sticking of a sprayed fuel to a sliding surface and other sections of the air flow control valve 123. Hereby, it is possible to prevent the air flow control valve 123 from malfunctioning due to the presence of solid deposits.

Although the inlet air velocity pattern shown in Fig. 35 is controlled in step-by-step fashion, in the case of one fuel injection cycle for two air inlet cycles, sprayed fuel particles may likewise be carried by, during the first inlet cycle, atomizing the fuel particles under a slightly open status (fixed) and then during the next inlet cycle, injecting no fuel under a significantly open state (fixed).

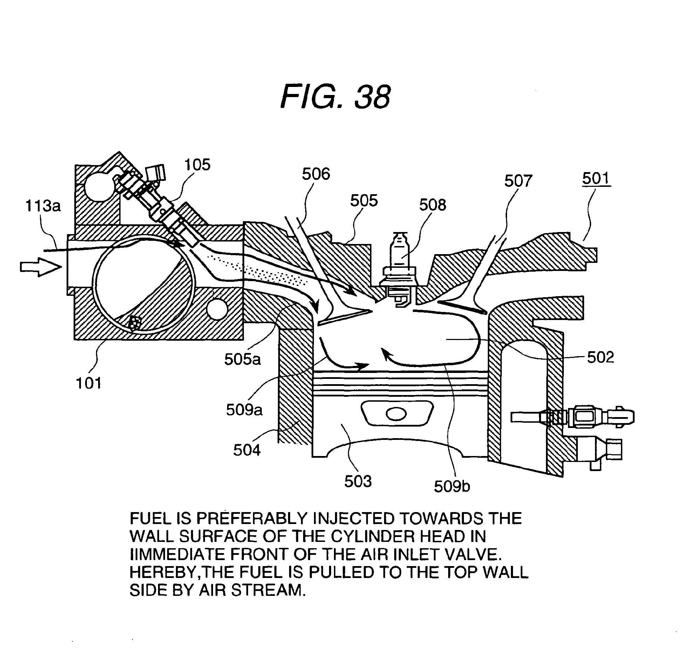

Fig. 37 shows the relationship in position between the opening shape of the inlet passageway and the fuel spraying mechanism 105. Fig. 37(1) shows an opening state 328 under which the velocity around the fuel spraying mechanism 105 is increased by restricting the opening area of the inlet passageway, whereas Fig. 37(2) shows a convex-shaped opening state 331 under which, from the above state, the quantity of air stream is increased by spreading the opening area in step-like fashion. Such velocity pattern as shown in Fig. 35 is obtained by controlling the thus-machined opening in the air flow control valve 123.

Figs. 38 to 40 show engine-test-based confirmation results on usage effectiveness of the mixture supply device in connection with the formation of a mixture during engine start.

Fig. 38 shows one of cylinders 501 used in a multi-cylinder internal-combustion engine, wherein the mixture supply device 101 of the present invention is provided near an air inlet valve 506. Numerals 502, 503, 504, 505, and 506 denote a combustion chamber, a piston, a cylinder, a cylinder head, an air inlet valve for opening and closing an air inlet, respectively. Similarly, numerals 507 and 508 denote an exhaust valve and an ignition plug, respectively.

Tests were conducted to monitor the quantity of hydrocarbon (HC) emitted during a change from the 200-rpm operating state of the engine, called "cranking", immediately after the engine of the automobile was started by turning the key to its ON position, to 1,400-rpm operation called "first idling". Attention was paid particularly to a time of about 20 seconds from the start. The engine coolant temperature at this time was 25°C. Also, the injection pulse width Ti of the fuel spraying mechanism 105 was about 7 milliseconds.

An air stream 113a flowing in from the mixture supply device 101 is carried so that the fuel particles injected from the fuel spraying mechanism 105 during an air inlet stroke of the internal-combustion engine do not stick to a wall surface 505a of the cylinder head 505. The air stream is thus carried because an injection direction of the fuel spraying mechanism 105 is set to the direction of the wall surface 505a of the cylinder head and because air streams 509a and 509b flow along an inner wall surface of the cylinder 504. Provided that during the start of the internal-combustion engine, the flow of a fuel can be prevented from stopping and staying inside the inlet passageway for reasons such s sticking to a wall surface, it is possible to rapidly induct injected fuel into the combustion chamber and thus to shorten the time required for the ratio between the air and fuel (air-fuel ratio) within the combustion chamber to reach a combustible level. It is therefore possible to reduce the time required for engine start (in other words, to improve startability) and also to reduce the quantity of fuel discharged during the period from the complete explosion stroke of the engine to the start thereof. Furthermore, if the stoppage of the fuel is cleared, this is also effective for accelerating a transient response during which the engine changes in output. If the quantity of air inlet changes according to the particular load of the engine, the quantity of fuel injection also needs to be changed to maintain the internal air-fuel ratio of the combustion chamber at the required value. At this time, if the fuel is staying in the air inlet pipe, the possible inflow of the staying fuel into the combustion may cause a mixture denser than the required value in terms of air-fuel ratio to flow into the combustion chamber, or since, during the air inlet stroke of the engine, injected fuel does not flow into the combustion chamber and all the fuel stays therein, a fuel denser or thinner than the required value in terms of air-fuel ratio may flow into the combustion chamber. Therefore, if a fuel denser or thinner than the required value in terms of air-fuel ratio flows into the combustion chamber, the engine may not exhibit its required performance. If such staying state of fuel is cleared, the response time up to the arrival of the air-fuel ratio within the combustion chamber at the required value is reduced, even in the event of a change in engine output, and consequently, the above problem is avoidable.

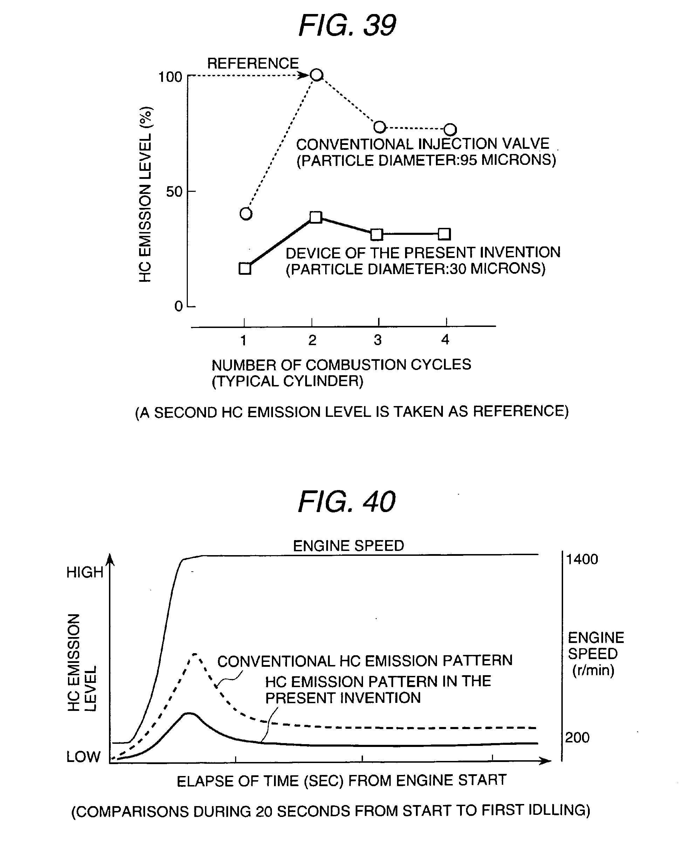

Fig. 39 shows HC emission levels against the combustion within a typical cylinder. When a conventional fuel injection device (95 microns in fuel particle size) was used in such conventional air inlet system as shown in Fig. 5, the greatest quantity of HC was emitted during the second combustion from engine start. This is caused mainly by the fact that as described above, since the large particle size of fuel during its first injection cycle at the start of the engine makes the fuel prone to stick to the wall surfaces of the inlet passageway or of the combustion chamber, the fuel left as a wall stream after not being used during the first combustion cycle is added during the second combustion cycle. In the figure, the HC emission level measured after the second combustion cycle from engine start occurred is taken as a reference level, and the values measured after the first, third, and fourth combustion cycles occurred are reduced and arranged for comparison. After the third and fourth combustion cycles, since the air velocity gradually increases, the combustion progressively progresses (the wall stream is suppressed) and this slightly reduces the respective HC emission levels.

In the mixture supply device 101, however, since the particle size of sprayed fuel is sufficiently small (30 microns or less), the acceleration of its gasification rapidly progresses combustion and the air velocity is also increased during the second combustion cycle onward, with the result that the combustion is further accelerated and there occur no increases in HC emission level.

In Fig. 40, an HC emission pattern obtained during about 20 seconds from engine start to first idling is shown for comparison with the pattern in the case of an engine which uses a fuel injection device of 95 microns in particle size in the configuration of Fig. 5. HC emission levels are reduced to almost half of conventional levels.

This is due to the fact that accelerated atomization of the fuel accelerated its gasification and improved the gasification rate of the fuel flowing into the combustion chamber. These results indicate that a decrease in the quantity of liquid fuel flowing into the combustion chamber reduced the quantity of unburnt fuel components within the exhaust and also improved startability.

Another favorable effect is that since there is required no equipment by which the air for atomization is to be supplied to the fuel spraying mechanism separately, the atomization of fuel can be accelerated without inciting any increases in costs. In addition, since the mixture supply device is provided for each cylinder, the quantity of mixture flowing into each cylinder is adjustable and the quantity of fuel is also adjustable for each cylinder. Accordingly, it is possible to suppress variations in the air-fuel ratio for each cylinder and variations in the inflow rate of the mixture and thus to operate the internal-combustion engine stably and suppress the occurrence of vibration and other unusual events due to abnormal combustion or the like.

### <Effects of the Invention>

As described above, according to the mixture supply device of the present invention, a mixture of the air, fuel, and recirculated exhaust that have their flow rates and fluidity controlled near the cylinders of an engine, can be supplied with high responsiveness relative to the output request sent from a driver to the engine. In particular, during the start of the engine, during low-speed operation thereof, and at low flow rates of air, by increasing the velocity of the air and improving the air inlet efficiency of the cylinders, or by atomizing the fuel and supplying a mixture high in air fluidity, the combustion state of the mixture can be improved for reduced harmful exhaust gas emissions from the engine and for reduced fuel consumption.

It is also possible to provide a mixture supply device that supplies a mixture desirable for the startability and responsiveness of an internal-combustion engine.

## Claims

1. A mixture supply device for use in a multi-cylinder type of internal-combustion engine, installed on an air inlet pipe (211) adapted to diverge and then re-converge inlet passageway sections connected to respective cylinders; said mixture supply device (101) comprising:
a first construction block in which a rotary body (300), a passageway section (310) formed inside said rotary body, and an opening (307) formed on part of an outer periphery of said rotary body (300) are constructed, and
a second construction block in which a passageway section (311) formed inside said rotary body and an opening (309) formed on part of the outer periphery of said rotary body (300) are constructed;
and wherein:
there is formed an air flow control valve (123) provided with a rotating device for rotating said rotary body (300) in a reversibly bi-directional manner, said air flow control valve (123) being further formed with a restricting portion at which restrictions in said two construction blocks each change in shape according to a particular rotary motion of said rotary body (300);
there is constructed a multiple-throttle mechanism (103) that contains said air flow control valve (123) inside; and
there is provided a fuel spraying device (215) having a fuel spraying port (105) disposed in proximity to the restricting portion in said air flow control valve.

2. A mixture supply device for use in a multi-cylinder type of internal-combustion engine, installed on an air inlet pipe (211) adapted to diverge and then re-converge air inlet passageway sections connected to respective cylinders; said mixture supply device (101) comprising:
a first construction block in which a rotary body (300), a passageway section (310) formed inside said rotary body (300), and an opening (307) formed on part of an outer periphery of said rotary body (300) are constructed, and
a second construction block in which a passageway section (311) formed inside said rotary body (300) and an opening (309) formed on part of the outer periphery of said rotary body (300) are constructed;
and wherein:
there is formed an air flow control valve (123) provided with a restricting portion at which restrictions in said two construction blocks change in shape so as to differ from each other according to a particular rotary motion of said rotary body (300);
there is constructed a multiple-throttle mechanism (103) that contains said air flow control valve (123) inside; and
there is provided a fuel spraying device (215) having a fuel spraying port (105) disposed in proximity to the restricting portion in said air flow control valve (123).

3. A mixture supply device for use in a multi-cylinder type of internal-combustion engine, installed on an air inlet pipe (211) adapted to diverge and then re-converge air inlet passageway sections connected to respective cylinders; said mixture supply device (101) comprising:
a first construction block in which a rotary body (300), a passageway section (310) formed inside said rotary body (300), and an opening (307) formed on part of an outer periphery of said rotary body (300) are constructed, and
a second construction block in which a passageway section (311) formed inside said rotary body (300) and an opening (309) formed on part of the outer periphery of said rotary body (300) are constructed;
and wherein:
there is formed an air flow control valve (123) provided with a restricting portion at which restrictions in said two construction blocks change in shape so as to differ from each other according to a particular rotary motion of said rotary body (300);
there is constructed a multiple-throttle mechanism (103) that contains said air flow control valve (123) inside;
there is provided a fuel spraying device (215) having a fuel spraying port (105) disposed in proximity to the restricting portion in said air flow control valve (123); and
a recirculated-exhaust entry port (141) is disposed in proximity to the restricting portion in said air flow control valve (123), and an exhaust recirculating mechanism (107) is provided, so that controlled inlet air, sprayed fuel particles, and recirculated exhaust are mixed near a downstream side of the restricting portion.

4. The mixture supply device for an internal-combustion engine, according to at least one of the claims 1 to 3; wherein two restrictions are constructed in a rotational direction of said air flow control valve (123).

5. The mixture supply device for an internal-combustion engine, according to at least one of the claims 1 to 4; wherein, for one restriction in said air flow control valve (123), a rotational angle of said rotary body (300) is set to ensure that an outlet direction of inlet air faces the vicinity of said fuel spraying port (105) and that a high-speed air stream is supplied to the vicinity of said fuel spraying port (105) and then made to collide with a fuel injection stream sprayed therefrom.

6. The mixture supply device for an internal-combustion engine, according to at least one of the claims 1 to 5; wherein the opening (307) in the first construction block and the opening (309) in the second construction block are formed with different sizes, both openings (307, 309) being disposed so as to differ in a direction of opening.

7. The mixture supply device for an internal-combustion engine, according to at least one of the claims 1 to 6; wherein said air flow control valve (123) has parallel guide grooves, one in an axially circumferential direction of a rotational axis of said valve (123) and the other (319) in a longitudinal direction, the axially circumferential guide groove being formed with arc-like sealing members (313) communicating between adjacent inlet passageways in order to block flow routes for the air moving therethrough, and the longitudinal guide groove (319) being formed with bar-like movable sealing members (315) to block flow routes for the air leaking from an upstream side of said valve (123) to a downstream side thereof under a fully closed valve state.

8. The mixture supply device for an internal-combustion engine, according to at least one of the claims 1 to 7; wherein said air flow control valve (123) has parallel guide grooves in an axially circumferential direction of a rotational axis of said control valve (123), said flow control valve (123) further containing, therein, movable sealing members (315) each capable of moving inside a guide groove (319) in order to reduce the flow rate of the air leaking from an upstream side of said valve (123) to a downstream side thereof; and wherein each movable sealing member (315) is pressed in a reducing direction of an air flow route clearance by an air pressure difference occurring between the upstream and downstream of said control valve (123), depending on whether said control valve (123) is fully closed or remains almost closed, and the movable sealing member (315) thereby comes into contact with a mating surface to create a contact sealing effect for blocking the air flow route clearance, and when said air pressure difference is small, yields a variable sealing effect so as to mainly produce a non-contact sealing effect.

9. The mixture supply device for an internal-combustion engine, according to at least one of the claims 1 to 8; wherein said air flow control valve (123) has a deformed section whose cross-sectional area is particularly small; and wherein, depending on an air pressure difference occurring between an upstream and downstream of said control valve (123) under a fully closed or almost closed valve state, a body of said valve (123), or particularly, its deformed section is deformed and hereby a sealing section provided in said valve (123) is pressed in a reducing direction of an air flow route clearance, with the result that the sealing section thereby comes into contact with a mating surface to create a contact sealing effect for blocking the air flow route clearance around said valve (123), and when said air pressure difference is small, yields a variable sealing effect so as to mainly produce a non-contact sealing effect.

10. The mixture supply device for an internal-combustion engine, according to at least one of the claims 1 to 9; wherein said arc-like sealing members (313) and said movable sealing members (315) installed in said air flow control valve (123) are constructed of fluorinated resin, polyether-ether-ketone resin, polyimide resin, polyamide resin, polyphenylene sulfide resin, and a resin material formed mainly from these substances.

11. A mixture supply device for use in a multi-cylinder type of internal-combustion engine, having an air flow control valve (123) for adjusting the quantity of air taken in;
wherein:
inside an inlet passageway hole communicating with an opening in a restricting portion of said air flow control valve (123), a fuel spraying port (105) of a fuel spraying mechanism is disposed downstream relative to the opening in said restricting portion; and
a high-speed air stream created by said restricting portion during starting operation of the internal-combustion engine is inducted from an outer periphery of said fuel spraying mechanism to said fuel spraying port (105) and atomizes and carries fuel particles injected.

12. A mixture supply device for use in a multi-cylinder type of internal-combustion engine, having an air flow control valve (123) for adjusting the quantity of air taken in, with said air flow control valve (123) being changed in terms of cross-sectional shape of an opening in a restricting portion by a rotary motion;
wherein:
inside an air inlet passageway hole communicating with said opening, a fuel spraying port (105) of a fuel spraying mechanism is disposed downstream relative to said opening in said restricting portion; and
during an air inlet stroke duration at the start of operation of the internal-combustion engine, an opening area of said restricting portion is controlled so as to increase, and a high-speed air stream created by said restricting portion is inducted from an outer periphery of said fuel spraying mechanism to said fuel spraying port (105), atomizes fuel particles injected, and carries the atomized fuel particles by means of a quantitatively increased air stream.

13. A mixture supply device for use in a multi-cylinder type of internal-combustion engine, having an air flow control valve (123) for adjusting the quantity of air taken in, with said air flow control valve (123) adjusting the quantity of air by being changed in cross-sectional shapes of openings in restricting portions by a rotary motion;
wherein:
said openings are of a convex shape, with the opening at a smaller-area side being disposed so as to be positioned inside an air inlet passageway hole in which is contained a fuel spraying port (105) of a fuel spraying mechanism, and the opening at a larger-area side, positioned outside the air inlet passageway hole; and
during an air inlet stroke duration at the start of operation of the internal-combustion engine, control is provided in order for the smaller-area opening to be changed to the larger-area opening, and a high-speed air stream created by said corresponding restricting portion is inducted from an outer periphery of said fuel spraying mechanism to said fuel spraying port (105), atomizes fuel particles injected, and carries the atomized fuel particles by means of a quantitatively increased air stream.
